(19) **Europäisches Patentamt / European Patent Office / Office européen des brevets**

(11) **EP 3 316 535 B1**

(12) **EUROPEAN PATENT SPECIFICATION**

(45) Date of publication and mention of the grant of the patent:
**07.10.2020 Bulletin 2020/41**

(21) Application number: **16813637.2**

(22) Date of filing: **27.05.2016**

(51) Int Cl.:
*H04L 25/03* (2006.01)   *H04B 10/61* (2013.01)

(86) International application number:
**PCT/CN2016/083715**

(87) International publication number:
**WO 2016/206521 (29.12.2016 Gazette 2016/52)**

(54) **SELF-ADAPTIVE EQUALIZER AND METHOD OF IMPLEMENTING ADAPTIVE EQUALIZATION**

SELBSTADAPTIVER ENTZERRER UND VERFAHREN ZUR IMPLEMENTIERUNG VON ADAPTIVER ENTZERRUNG

ÉGALISEUR AUTO-ADAPTATIF ET PROCÉDÉ DE MISE EN OEUVRE D'UNE ÉGALISATION ADAPTATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2015 CN 201510355351**

(43) Date of publication of application:
**02.05.2018 Bulletin 2018/18**

(73) Proprietor: **ZTE Corporation**
**Shenzhen, Guangdong 518057 (CN)**

(72) Inventor: **WANG, Weiming**
**Shenzhen**
**Guangdong 518057 (CN)**

(74) Representative: **Regimbeau**
**20, rue de Chazelles**
**75847 Paris Cedex 17 (FR)**

(56) References cited:
**CN-A- 103 973 614      CN-A- 105 281 792**
**JP-A- 2011 199 808      US-A1- 2012 134 676**
**US-A1- 2012 134 684      US-A1- 2012 134 684**
**US-B1- 9 077 572**

- **SEB J SAVORY: "Digital filters for coherent optical receivers", OPTICS EXPRESS, OSA PUBLISHING, US, vol. 16, no. 2, 21 January 2008 (2008-01-21), pages 804-817, XP007906766, ISSN: 1094-4087, DOI: 10.1364/OE.16.000804**

**Description**

**TECHNICAL FIELD**

The present application relates to, but is not limited to, high-speed optical transmission techniques.

**BACKGROUND**

In a high-speed optical transmission system, a coherent receiver needs to compensate for various losses in optical channels, such as Polarization Mode Dispersion (PMD), Chromatic Dispersion (CD) and Polarization Dependent Loss (PDL). An adaptive equalizer adaptively tracks channel features through the Digital Signal Processing (DSP) technology to compensate for the various losses in the optical channels.

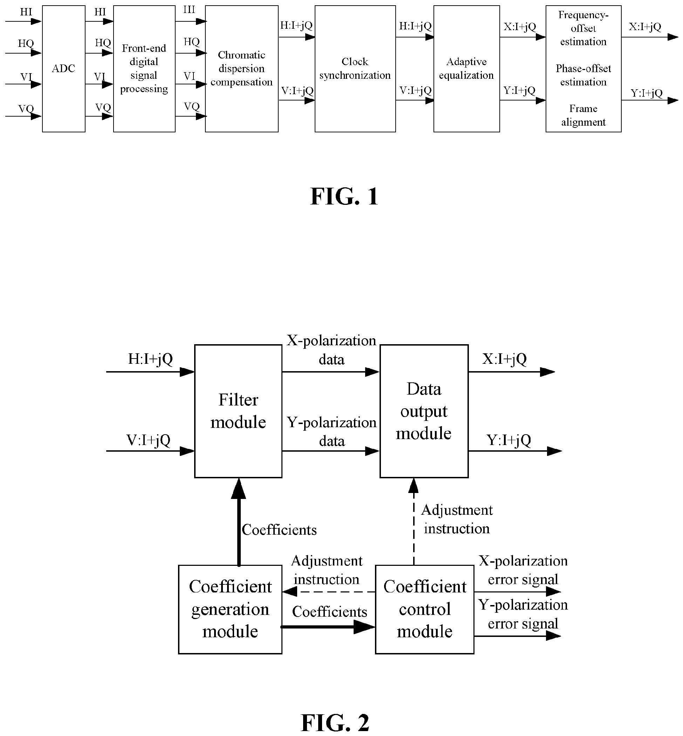

FIG. 1 is a schematic diagram illustrating functional constitution of an existing coherent receiver. As illustrated in FIG. 1, an input signal of the receiver is composed of a horizontal polarization component H and a vertical polarization component V. Each component includes an in-phase component I and a quadrature component Q. That is, there are four signals: HI, HQ, VI and VQ. The signals undergo an analog-to-digital conversion (ADC), a front-end digital signal processing, a chromatic dispersion compensation, a clock synchronization and an adaptive equalization successively. X-polarization data and Y-polarization data are outputted through the adaptive equalization and then go through a frequency-offset estimation unit, a phase-offset estimation unit, a frame alignment unit, etc. The chromatic dispersion compensation is used for compensating for chromatic dispersion in channels. The clock synchronization is used for processing the clock synchronization between a transmitter and the receiver. The adaptive equalization is used for compensating for PMD, residual CD, PDL and polarization mode demultiplexing and is implemented by an adaptive equalizer. The frequency-offset estimation and the phase-offset estimation are used for correcting a frequency offset and a phase offset between a transmitting laser and a local oscillator laser. The frame alignment is used for finding a system frame header and extracting system information from the system frame header.

The adaptive equalizer plays an important role in the coherent receiver. In general, the adaptive equalizer includes several finite impulse response (FIR) filters and a blind equalization algorithm unit, e.g., a common modulus algorithm (CMA) unit, for generating coefficients required for FIR calculation. Adaptive convergence of the coefficients plays a key role in a stable operation of the adaptive equalizer. Due of factors like time-varying channel losses and IQ skew, the FIR coefficients slowly moves away from a center to an edge of the coefficients or even to outside an FIR tap range. As a result, system error codes increase sharply or even reconvergence is required for the adaptive equalizer, thereby causing a service data interruption. Therefore, an operation process of the adaptive equalizer needs to be monitored and intervened in. This is an important step in a stable operation of a high-speed optical transmission system.

At present, to monitor and intervene in the operation process of the adaptive equalizer, it has been proposed in the related art to monitor and intervene in an operation of the adaptive equalizer by use of features including a barycenter the coefficients. Such implementation substantially includes: first, using initial coefficients for convergence of the adaptive equalizer, and, after the convergence is stable, feeding back skew between polarization states through a system frame alignment to re-initialize the coefficient so as to enable the coefficient located within a tap center range; second, when the adaptive equalizer operates stably, extracting an error signal from the coefficients, and finely adjusting and controlling the coefficients until the error signal approaches zero; and finally, when it is detected that a distance between a tap center and a barycenter of the coefficients is greater than a certain threshold, moving the coefficients by a distance of an integer number of sampling points, and, in order not to affect the system frame alignment, directly zeroizing a filter output.

From the related art described above for monitoring and intervening in the operation process of the adaptive equalizer, it can be seen that a system needs twice convergences of the adaptive equalizer. This not only involves a complex process and affects time for the system to start operating stably, but also depends on the skew value fed back through the frame alignment after the first convergence. Additionally, since the error signal is calculated from both of the polarization states, both fine adjustment of the coefficients and moving of the coefficients by a distance of an integer number of sampling points are performed towards one direction. This is not flexible and cannot cover all channel scenarios. Moreover, the step of directly zeroizing the filter output after moving the coefficients by a distance of an integer number of sampling points does not take into account amount of removed energy of the coefficients, thereby causing a large code error and affecting performance of a back-end module.

That is, in the prior art, the problem of how to adjust coefficients to a tap center of the coefficients and how to prevent a coefficient adjustment from significantly affecting systematic code error cannot be addressed effectively. Further relevant technology is also known from US 2012/134684 A1 (KOIZUMI NOBUKAZU [JP] ET AL) 31 May 2012 (2012-05-31) which relates to an adaptive equalizer includes a finite impulse response filter with a predetermined number of taps.

SUMMARY

The following is a summary of a subject matter described herein in detail. This summary is not intended to limit the scope of the claims.

The present invention provides an adaptive equalizer and an adaptive equalization method of the adaptive equalizer, so as to flexibly and effectively adjust a position of a coefficient required for FIR calculation and thereby ensure system stability. The present disclosure provides an adaptive equalizer according to independent claim 1, and an adaptive equalization method of an adaptive equalizer according to independent claim 12. Further improvements and embodiments are provided in the dependent claims.

Embodiments of the present invention provide an adaptive equalizer. The adaptive equalizer includes at least a coefficient generation module, a filter module, a coefficient control module and a data output module.

The coefficient generation module is configured to calculate multiple coefficients required for filtering and to output the coefficients to the filter module and the coefficient control module.

The filter module is configured to filter input data by use of the coefficients to obtain X-polarization data and Y-polarization data, and to output the X-polarization data and the Y-polarization data to the data output module.

The data output module is configured to buffer and output the X-polarization data and the Y-polarization data.

The coefficient control module is configured to calculate, based on the coefficients from the coefficient generation module, a first distance between a tap center and a barycenter of coefficients for mapping H and V onto X and a second distance between a tap center and a barycenter of coefficients for mapping H and V onto Y; to obtain an X-polarization error signal based on the first distance and obtain a Y-polarization error signal based on the second distance, and to perform an interpolation for the X-polarization data with the X-polarization error signal and an interpolation for the Y-polarization data with the Y-polarization error signal in a clock synchronization.

The coefficients include a coefficient $c_{xh}(m)$ for mapping H onto X, a coefficient $c_{xv}(m)$ for mapping V onto X, a coefficient $c_{yh}(m)$ for mapping H onto Y and a coefficient $c_{yv}(m)$ for mapping V onto Y.

Optionally, the filter module is a finite impulse response (FIR) filter.

Optionally, the coefficient generation module is implemented by a blind detection algorithm.

Optionally, using the coefficient control module to calculate the first distance and the second distance includes the following steps:

the barycenter *xc_mass* of coefficients for mapping H and V onto X is calculated according to a formula

$$xc\_mass = \sum_{m=1}^{M} \left( m \times |c_{xh}(m)|^n + m \times |c_{xv}(m)| \right) \Big/ \sum_{m=1}^{M} \left( |c_{xh}(m)|^n + |c_{xv}(m)| \right);$$

the barycenter *yc_mass* of coefficients for mapping H and V onto Y is calculated according to a formula

$$yc\_mass = \sum_{m=1}^{M} \left( m \times |c_{yh}(m)|^n + m \times |c_{yv}(m)| \right) \Big/ \sum_{m=1}^{M} \left( |c_{yh}(m)|^n + |c_{yv}(m)| \right);$$

the first distance *xc_mass* between the tap center and the barycenter *xc_dsc* of coefficients for mapping H and V onto X is calculated according to a formula *xc_dsc = xc_mass* -(*M* +1) / 2.
the second distance *yc_mass* between the tap center and the barycenter *yc_dsc* of coefficients for mapping H and V onto Y is calculated according to a formula *yc_dsc = yc_mass* - (*M* +1)/ 2

M denotes a number of taps for the FIR filter and n denotes a positive integer.

In an exemplary embodiment, using the coefficient control module to obtain the X-polarization error signal and the Y-polarization error signal includes the following step:

the X-polarization error signal and the Y-polarization error signal are generated by use of a first-order filter loop, a second-order filter loop, or a filter loop plus an integrator circuit at an output of the filter loop according to requirements on system performance.

In an exemplary embodiment, using the coefficient control module to obtain the X-polarization error signal and the Y-polarization error signal and to perform the interpolation for the X-polarization data with the X-polarization error signal and the interpolation for the Y-polarization data with the Y-polarization error signal in the clock synchronization includes the following steps:

the X-polarization error signal cx_err and the Y-polarization error signal cy_err are fed back to an existing clock synchronization module for processing, and a sum of a clock error signal clk_err extracted by the clock synchronization module and the X-polarization error signal cx_err and a sum of the clock error signal clk_err extracted by the clock synchronization module and the Y-polarization error signal cy_err are calculated to obtain a total X-polarization error signal x_err for the X-polarization data and a total Y-polarization error signal y_err for the Y-polarization data.

In an exemplary embodiment, the coefficient control module is further configured to detect energy of coefficients for mapping H and V onto X and energy of coefficients for mapping H and V onto Y, to determine whether to adjust integer sampling points of the coefficients when the energy of coefficients is at a tap edge, and when the integer sampling points need to be adjusted, to output an adjustment instruction to the coefficient generation module and the data output processing module.

In an exemplary embodiment, the coefficient control module is further configured to adjust coefficients generated by the coefficient control module according to the adjustment instruction from the coefficient control module.

In an exemplary embodiment, the data output module is further configured to adjust data to be outputted according to the adjustment instruction from the coefficient control module.

In an exemplary embodiment, the energy $px(m)$ of coefficients for mapping H and V onto X is calculated according to a formula $px(m) = |c_{xh}(m)|^n + |c_{xv}(m)|^n$.

In an exemplary embodiment, the energy $py(m)$ of coefficients for mapping H and V onto Y is calculated according to a formula $py(m) = |c_{yh}(m)|^n + |c_{yv}(m)|^n$.

A value range of m is [1, M] and n denotes a positive integer.

In an exemplary embodiment, determining whether to adjust the coefficient integer sampling points includes the following steps:

when a ratio of energy of any one of front several taps for the energy $px(m)$ of coefficients for mapping H and V onto X/the energy $py(m)$ of coefficients for mapping H and V onto Y to total energy is greater than a preset first threshold thrl, a ratio of energy of rear two taps, that are to be removed, for the $px(m)$ /the $py(m)$ to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;

when a ratio of energy of any one of rear several taps for the energy $px(m)$ of coefficients for mapping H and V onto X/the energy $py(m)$ of coefficients for mapping H and V onto Y to the total energy is greater than the first threshold thrl, a ratio of energy of front two taps, that are to be removed, for the $px(m)$ /the $py(m)$ to the total energy is less than the second threshold thr2, and a ratio of energy of new front taps to the total energy is less than the third threshold thr3 after the front two taps are removed, the cost for roughly adjusting the coefficient is determined to be lower than the cost for not roughly adjusting the coefficient and an adjustment instruction for roughly adjusting the coefficient leftwards is generated.

In an exemplary embodiment, the coefficient control module is further configured to calculate the barycenter $xc\_mass$ of coefficients for mapping H and V onto X and the barycenter $yc\_mass$ of coefficients for mapping H and V onto Y, calculate a maximum value of the barycenter $xc\_mass$ and a maximum value of the barycenter $yc\_mass$ in a certain period, calculate a difference value between the maximum values of the barycenter $xc\_mass$ and the barycenter $yc\_mass$, and determine whether to adjust integer sampling points of the coefficients based on the difference value; and when the integer sampling points of the coefficients need to be adjusted, output an adjustment instruction to the coefficient generation module to adjust the coefficients and to the data output module to adjust data to be outputted.

In an exemplary embodiment, the determining whether to adjust the integer sampling points of the coefficients includes the following steps:

when the difference value between the maximum value of the barycenter $xc\_mass$ of coefficients for mapping H and V onto X and the maximum value of the barycenter $yc\_mass$ of coefficients for mapping H and V onto Y is greater than a preset fourth threshold thr4, an adjustment instruction for adjusting X-polarization coefficients leftwards and adjusting Y-polarization coefficients rightwards is generated;

when the difference value between the maximum value of the barycenter $xc\_mass$ of coefficients for mapping H and V onto X and the maximum value of the barycenter $yc\_mass$ of coefficients for mapping H and V onto Y is less than a preset fifth threshold -thr4, an adjustment instruction for adjusting the X-polarization coefficients rightwards and adjusting the Y-polarization coefficients leftwards is generated.

In an exemplary embodiment, when a system converges initially, the first threshold thrl, the second threshold thr2, the third threshold thr3 and the fourth threshold thr4 are set loosely.

When the system works steadily except for a sudden change in a channel, the first threshold thrl, the second threshold thr2, the third threshold thr3 and the fourth threshold thr4 are set strictly.

In an exemplary embodiment, the coefficient generation module is further configured, according to the adjustment instruction, to: when the adjustment instruction is used for roughly adjusting coefficients leftwards, performing a process of $c_{xh}'(m) = \begin{cases} c_{xh}(m+1) & m = 1, \cdots, M-1 \\ 0 & m = M \end{cases}$ and performing the same process to $c_{xv}'(m)$; and when the adjustment instruction is used for roughly adjusting the coefficients rightwards, performing a process of

$$c_{xh}'(m) = \begin{cases} c_{xh}(m+1) & m = 1, \cdots, M-1 \\ 0 & m = M \end{cases}$$ and performing the same process to $c_{xv}'(m)$; or, when the adjustment instruction is used for roughly adjusting the coefficients leftwards, remove front two sampling points for the coefficients; and when the adjustment instruction is used for roughly adjusting the coefficients rightwards, remove rear two sampling points for the coefficients.

In an exemplary embodiment, the data output processing module is further configured to: when the adjustment instruction is not received, which indicates that there is no need to adjust the coefficients, enable the adaptive equalizer to output rear N of (N + samp) data points; when the adjustment instruction is used for roughly adjusting the coefficient rightwards, enable the adaptive equalizer to output rear (N - samp) of the (N + samp) data points; and when the adjustment instruction is used for roughly adjusting the coefficient leftwards, enable the adaptive equalizer to output rear (N + samp) of the (N + samp) data points; and buffer the data to be outputted and output the data with a fixed length of N.

N denotes a length of FIR output data.

The present invention further provides an adaptive equalization method of an adaptive equalizer. The method includes the following steps:

input data is filtered by use of acquired coefficients to obtain X-polarization data and Y-polarization data, and the X-polarization data and the Y-polarization data are buffered and outputted;
a first distance between a tap center and a barycenter of coefficients for mapping H and V onto X and a second distance between a tap center and a barycenter of coefficients for mapping H and V onto Y are calculated based on the coefficients;
an X-polarization error signal and a Y-polarization error signal are obtained according to system performance and based on the first distance and the second distance, and an interpolation for the X-polarization data with the X-polarization error signal and an interpolation for the Y-polarization data with the Y-polarization error signal are performed in a clock synchronization.

In an exemplary embodiment, the coefficients include a coefficient $c_{xh}(m)$ for mapping H onto X, a coefficient $c_{xv}(m)$ for mapping V onto X, a coefficient $c_{yh}(m)$ for mapping H onto Y and a coefficient $c_{yv}(m)$ for mapping V onto Y.

In an exemplary embodiment, the filtering is performed by a finite impulse response (FIR) filter and the filtering the input data by use of the coefficients includes the following steps:

the X-polarization data is obtained according to a formula

$$x(n) = \sum_{m=1}^{M} c_{xh}(m) \times h(n-m) + \sum_{m=1}^{M} c_{xv}(m) \times v(n-m)$$ ;

the Y-polarization data is obtained according to a formula $y(n) = \sum_{m=1}^{M} c_{yh}(m) \times h(n-m) + \sum_{m=0}^{M} c_{yv}(m) \times v(n-m)$ .

M denotes a number of taps for the FIR filter, $x(n)$ denotes the X-polarization data, $y(n)$ denotes the Y-polarization data, $h(n-m)$ denotes H-polarization data inputted into the FIR filter and $v(n-m)$ denotes V-polarization data inputted into the FIR filter.

In an exemplary embodiment, the calculating the first distance and the second distance includes the following steps:

the barycenter $xc\_mass$ of coefficients for mapping H and V onto X is calculated according to a formula

$$xc\_mass = \sum_{m=1}^{M} (m \times |c_{xh}(m)|^n + m \times |c_{xv}(m)|) \Big/ \sum_{m=1}^{M} (|c_{xh}(m)|^n + |c_{xv}(m)|)$$ ;

the barycenter $yc\_mass$ of coefficients for mapping H and V onto Y is calculated according to a formula

$$yc\_mass = \sum_{m=1}^{M}(m\times|c_{yh}(m)|^{n}+m\times|c_{yv}(m)|)\bigg/\sum_{m=1}^{M}(|c_{yh}(m)|^{n}+|c_{yv}(m)|)\ ;$$

The first distance $xc\_mass$ between the tap center and the barycenter $xc\_dsc$ of coefficients for mapping H and V onto X is calculated according to a formula $xc\_dsc = xc\_mass -(M+1)/2$;

The second distance $yc\_mass$ between the tap center and the barycenter $yc\_dsc$ of coefficients center for mapping H and V onto Y is calculated according to a formula $yc\_dsc = yc\_mass-(M+1)/2$

M denotes a number of taps for the FIR filter and n denotes a positive integer.

In an exemplary embodiment, the obtaining the X-polarization error signal and the Y-polarization error signal includes the following step:

the X-polarization error signal and the Y-polarization error signal are generated by use of a first-order filter loop, a second-order filter loop, or a filter loop plus an integrator circuit at an output of the filter loop according to requirements on system performance.

In an exemplary embodiment, the obtaining the X-polarization error signal and the Y-polarization error signal, and performing the interpolation for the X-polarization data with the X-polarization error signal and the interpolation for the Y-polarization data with the Y-polarization error signal in the clock synchronization includes the following step:

the X-polarization error signal cx_err and the Y-polarization error signal cy_err are fed back to an existing clock synchronization module for processing, and a sum of an extracted clock error signal clk err and the X-polarization error signal cx_err and a sum of the extracted clock error signal clk_err and the Y-polarization error signal cy_err are calculated to obtain a total X-polarization error signal x_err for the X-polarization data and a total Y-polarization error signal y_err for the Y-polarization data.

In an exemplary embodiment, the method further includes the following steps:

energy of coefficients for mapping H and V onto X and energy of coefficients for mapping H and V onto Y are detected, and whether to adjust integer sampling points of the coefficients is determined when the energy of coefficients is at a tap edge;

when the integer sampling points need to be adjusted, the coefficient and data to be outputted are adjusted according to an adjustment instruction.

In an exemplary embodiment, the energy $px(m)$ of coefficients for mapping H and V onto X is calculated according to a formula $px(m) =|c_{xh}(m)|^{n}+|c_{xv}(m)|^{n}$;

the energy $py(m)$ of coefficients for mapping H and V onto Y is calculated according to a formula $py(m) =|c_{yh}(m)|^{n}+|c_{yv}(m)|^{n}$;

a value range of m is [1, M] and n denotes a positive integer.

In an exemplary embodiment, the determining whether to adjust the integer sampling points of the coefficients includes the following steps:

when a ratio of energy of any one of front several taps for the energy $px(m)$ of coefficients for mapping H and V onto X/the energy $py(m)$ of coefficients for mapping H and V onto Y to total energy is greater than a preset first threshold thrl, a ratio of energy of rear two taps, that are to be removed, for the $px(m)$ /the $py(m)$ to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;

when a ratio of energy of any one of rear several taps for the energy $px(m)$ of coefficients for mapping H and V onto X/the energy $py(m)$ of coefficients for mapping H and V onto Y to the total energy is greater than the first threshold thrl, a ratio of energy of front two taps, that are to be removed, for the $px(m)$ /the $py(m)$ to the total energy is less than the second threshold thr2, and a ratio of energy of new front taps to the total energy is less than the third threshold thr3 after the front two taps are removed, then the cost for roughly adjusting the coefficient is determined to be lower than the cost for not roughly adjusting the coefficient and an adjustment instruction for roughly adjusting the coefficient leftwards is generated.

In an exemplary embodiment, the method further includes the following steps:

the barycenter $xc\_mass$ of coefficients for mapping H and V onto X and the barycenter $yc\_mass$ of coefficients for mapping H and V onto Y are calculated, a maximum value of the barycenter *xc_mass* and a maximum value of the barycenter *yc_mass* are calculated in a certain period, a difference value between the maximum values of the barycenter *xc_mass* and the barycenter *yc_mass* is calculated, and whether to adjust integer sampling points of the coefficients is determined based on the difference value;

when the integer sampling points of the coefficients need to be adjusted, the coefficient and data to be outputted are adjusted according to an adjustment instruction.

In an exemplary embodiment, the whether to adjust the integer sampling points of the coefficients includes the following steps:

when the difference value between the maximum value of the barycenter *xc_mass* of coefficients for mapping H and V onto X and the maximum value of the barycenter *yc_mass* of coefficients for mapping H and V onto Y is greater than a preset fourth threshold thr4, an adjustment instruction for adjusting X-polarization coefficients leftwards and adjusting Y-polarization coefficients rightwards is generated;

when the difference value between the maximum value of the barycenter *xc_mass* of coefficients for mapping H and V onto X and the maximum value of the barycenter *yc_mass* of coefficients for mapping H and V onto Y is less than a preset fifth threshold -thr4, an adjustment instruction for adjusting the X-polarization coefficients rightwards and adjusting the Y-polarization coefficients leftwards is generated.

In an exemplary embodiment, when a system converges initially, the first threshold thrl, the second threshold thr2, the third threshold thr3 and the fourth threshold thr4 are set loosely.

In an exemplary embodiment, when the system works steadily except for a sudden change in a channel, the first threshold thr1, the second threshold thr2, the third threshold thr3 and the fourth threshold thr4 are set strictly.

In an exemplary embodiment, the adjusting the coefficients according to the adjustment instruction includes the following steps:

when the adjustment instruction is used for roughly adjusting coefficients leftwards, a process of

$$c_{xh}'(m) = \begin{cases} c_{xh}(m+1) & m = 1, \cdots, M-1 \\ 0 & m = M \end{cases}$$ is performed and the same process is performed to $c_{xv}'(m)$; and

when the adjustment instruction is used for roughly adjusting the coefficients rightwards, a process of

$$c_{xh}'(m) = \begin{cases} 0 & m = 1 \\ c_{xh}(m-1) & m = 2, \cdots, M \end{cases}$$ is performed and the same process is performed to $c_{xv}'(m)$;

or, when the adjustment instruction is used for roughly adjusting the coefficients leftwards, front two sampling points for the coefficients are removed; and when the adjustment instruction is used for roughly adjusting the coefficients rightwards, rear two sampling points for the coefficients are removed.

In an exemplary embodiment, the adjusting the data to be outputted according to the adjustment instruction includes the following steps:
when the adjustment instruction is not received, which indicates that there is no need to adjust the coefficients, the adaptive equalizer outputs rear N of (N + samp) data points; when the adjustment instruction is used for roughly adjusting the coefficients rightwards, the adaptive equalizer outputs rear (N - samp) of the (N + samp) data points; and when the adjustment instruction is used for roughly adjusting the coefficients leftwards, the adaptive equalizer outputs rear (N + samp) of the (N + samp) data points;
The data to be outputted is buffered and the data with a fixed length of N is outputted.
N denotes a length of FIR output data.
As compared to the prior art, the solution of the present invention includes: filtering input data by use of acquired coefficients to obtain X-polarization data and Y-polarization data, and buffering and outputting the X-polarization data and the Y-polarization data; calculating, based on the coefficients, a first distance between a tap center and a barycenter of coefficients for mapping H and V onto X and a second distance between a tap center and a barycenter of coefficients for mapping H and V onto Y; and obtaining an X-polarization error signal and a Y-polarization error signal according to system performance and based on the first distance and the second distance, and performing an interpolation for the X-polarization data with the X-polarization error signal and an interpolation for the Y-polarization data with the Y-polarization error signal in a clock synchronization. In the solution of the present invention, X-polarization and Y-polarization are considered when errors are calculated, and X-polarization data and Y-polarization data are adjusted separately, and thereby an X-polarization coefficient and a Y-polarization coefficient are flexibly and effectively controlled to approach a tap center.

In an exemplary embodiment, in the present invention, energy of coefficients for mapping H and V onto X and energy of coefficients for mapping H and V onto Y are detected; when the energy of coefficients is at a tap edge, according to a cost for adjusting the coefficients and a cost for not adjusting the coefficients, if necessary, the coefficients are adjusted according to an adjustment instruction and data to be outputted is adjusted according to an adjustment instruction. Here the adjustment instruction for adjusting the coefficients is fed back to a coefficient generation module and a data output module for adjusting the coefficients and the data to be outputted, thus preventing offsets of system frames.

In an exemplary embodiment, in the present invention, a barycenter *xc_mass* of coefficients for mapping H and V onto X and a barycenter *yc_mass* of coefficients for mapping H and V onto Y are calculated; a maximum value of the barycenter *xc_mass* and a maximum value the barycenter *yc_mass* are calculated in a certain period; a difference value between the maximum values of the barycenter *xc_mass* and the barycenter *yc_mass* is calculated; and if the coefficients need to be adjusted, the coefficients and the data to be outputted are adjusted according to an adjustment instruction based on the difference value, which well prevents the barycenters of the coefficients from offsetting to an edge.

In an exemplary embodiment, when a system converges initially, since an adaptive equalizer is in a blind adaptation process, the coefficients should be proactively roughly adjusted and intervened in, and in this case, according to the solution of the present invention, a first threshold thrl, a second threshold thr2, a third threshold thr3 and a fourth threshold thr4 may be set loosely; and when the system works steadily except for a sudden change in a channel, intervention in the coefficients should be reduced, and in this case, the first threshold thrl, the second threshold thr2, the third threshold thr3 and the fourth threshold thr4 may be set strictly. This ensures to flexibly and effectively control X-polarization coefficients and Y-polarization coefficients to approach a tap center, and reduces an adjustment of the coefficients.

Other features and advantages of embodiments of the present invention will be elaborated hereinafter in the description, and moreover, partially become apparent from the description, or will be understood through implementation of the present invention. The object and other advantages of embodiments of the present invention may be achieved and obtained through structures set forth in the description, claims and drawings.

Other aspects can be understood after the accompanying drawings and detailed description are read and understood.

## BRIEF DESCRIPTION OF DRAWINGS

FIG. 1 is a schematic diagram illustrating functional constitution of an existing coherent receiver.

FIG. 2 is a structure diagram of an adaptive equalizer according to an embodiment of the present invention.

FIG. 3 is a structure diagram of an adaptive equalizer according to an example of the present invention.

FIG. 4 is a schematic diagram illustrating how error signals outputted by an adaptive equalizer are used for clock synchronization according to an embodiment of the present invention.

FIG. 5 is a schematic diagram illustrating data combination for an adaptive equalizer according to an embodiment of the present invention.

FIG. 6 is a flowchart of an adaptive equalization method of an adaptive equalizer according to an embodiment of the present invention.

FIG. 7 is a flowchart of an adaptive equalization method according to a first example of the present invention.

FIG. 8 is a flowchart of an adaptive equalization method according to a second example of the present invention.

## DETAILED DESCRIPTION

Embodiments of the present invention will be described below with reference to the accompanying drawings. If not in collision, the embodiments described herein and the various methods in the embodiments may be combined with each other.

FIG. 2 is a structure diagram of an adaptive equalizer according to an embodiment of the present invention. The adaptive equalizer includes at least a coefficient generation module, a filter module, a coefficient control module and a data output module.

The coefficient generation module is configured to calculate coefficients required for filtering and to output the coefficients to the filter module and the coefficient control module. The coefficients include a coefficient $c_{xh}(m)$ for mapping H onto X, a coefficient $c_{xv}(m)$ for mapping V onto X, a coefficient $c_{yh}(m)$ for mapping H onto Y and a coefficient $c_{yv}(m)$ for mapping V onto Y. The coefficient generation module may be implemented by, e.g., a blind detection algorithm.

The filter module is configured to filter input data by use of the coefficients to obtain X-polarization data and Y-polarization data and to output the X-polarization data and the Y-polarization data to the data output module.

The filter module may be an FIR filter. The X-polarization data and the Y-polarization data are calculated according to a formula (1) and a formula (2) described below.

$$x(n) = \sum_{m=1}^{M} c_{xh}(m) \times h(n-m) + \sum_{m=1}^{M} c_{xv}(m) \times v(n-m) \tag{1}$$

$$y(n) = \sum_{m=1}^{M} c_{yh}(m) \times h(n-m) + \sum_{m=0}^{M} c_{yv}(m) \times v(n-m) \tag{2}$$

M denotes a number of taps for the FIR filter, $x(n)$ denotes the X-polarization data, $y(n)$ denotes the Y-polarization data, $h(n-m)$ denotes H-polarization data inputted into the FIR filter and $v(n-m)$ denotes V-polarization data inputted into the FIR filter. The FIR filter may be implemented in time domain or frequency domain. The blind detection algorithm may also be implemented in time domain or frequency domain.

The data output module is configured to buffer and output the X-polarization data and the Y-polarization data.

The coefficient control module is configured to calculate, based on the coefficients from the coefficient generation module, a first distance between a tap center and a barycenter of coefficients for mapping H and V onto X and a second distance between a tap center and a barycenter of coefficients for mapping H and V onto Y; to obtain an X-polarization error signal based on the first distance and a Y-polarization error signal based on the second distance; and to perform an interpolation for the X-polarization data with the X-polarization error signal and an interpolation for the Y-polarization data with the Y-polarization error signal in a clock synchronization.

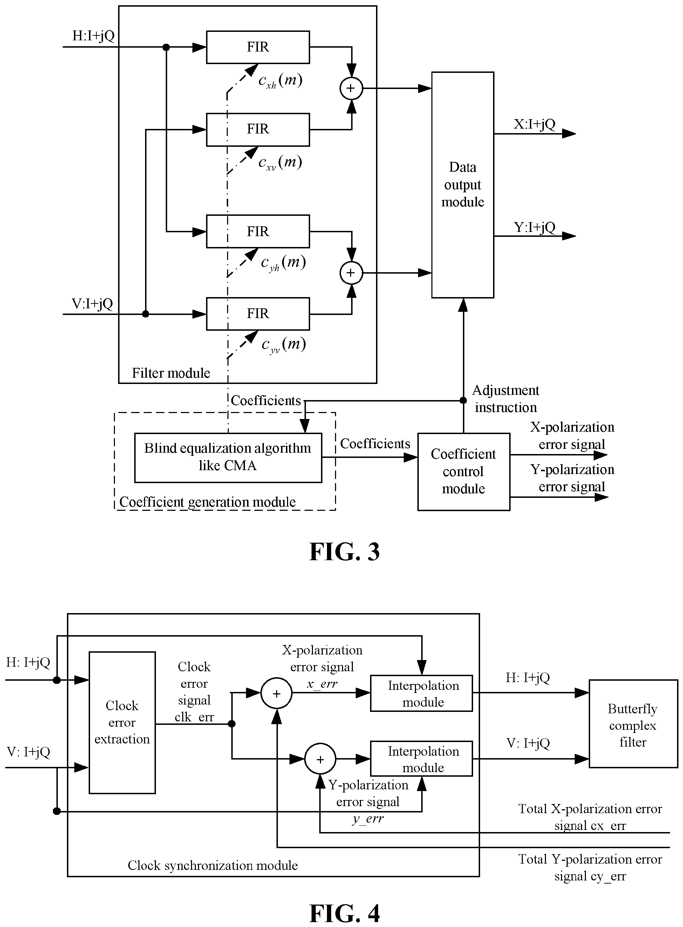

FIG. 3 is a structure diagram of an adaptive equalizer according to an example of the present invention. The specific implementation of FIG. 3 is consistent with that of FIG. 2, except that FIG. 3 illustrates an example in which an FIR filter serves as the filter module and a blind equalization algorithm, e.g., a CMA, is used by the coefficient generation module. Thus the specific implementation of FIG. 3 will not be described here.

In the coefficient control module:

a barycenter *xc_mass* of coefficients for mapping H and V onto X and a barycenter *yc_mass* of coefficients for mapping H and V onto Y are calculated according to a formula (3) and a formula (4) respectively:

$$xc\_mass = \sum_{m=1}^{M} (m \times |c_{xh}(m)|^n + m \times |c_{xv}(m)|) \Big/ \sum_{m=1}^{M} (|c_{xh}(m)|^n + |c_{xv}(m)|) \tag{3}$$

$$yc\_mass = \sum_{m=1}^{M} (m \times |c_{yh}(m)|^n + m \times |c_{yv}(m)|) \Big/ \sum_{m=1}^{M} (|c_{yh}(m)|^n + |c_{yv}(m)|) \tag{4}$$

N denotes a positive integer.

A first distance *xc_dsc* between the tap center and the barycenter *xc_mass* of coefficients for mapping H and V onto X is calculated according to a formula (5):

$$xc\_dsc = xc\_mass - (M+1)/2 \tag{5}.$$

A second distance *yc_dsc* between the tap center and the barycenter *yc_mass* of coefficients for mapping H and V onto Y is calculated according to a formula (6):

$$yc\_dsc = yc\_mass - (M+1)/2 \qquad (6).$$

An X-polarization error signal and a Y-polarization error signal may be generated by use of a first-order filter loop, a second-order filter loop, or a filter loop plus an integrator circuit at an output of the filter loop according to system features, i.e., requirements on system performance. Specific filter parameters are determined by the jitter feature of a system clock.

FIG. 4 is a schematic diagram illustrating how error signals outputted by an adaptive equalizer are used for clock synchronization according to an embodiment of the present invention. As illustrated in FIG. 4, an X-polarization error signal cx_err and a Y-polarization error signal cy_err are fed back to an existing clock synchronization module for processing, and a sum of a clock error signal clk_err extracted by the clock synchronization module and the X-polarization error signal cx_err and a sum of the clock error signal clk_err extracted by the clock synchronization module and the Y-polarization error signal cy_err are calculated so that a total X-polarization error signal x_err for the X-polarization data and a total Y-polarization error signal y_err for the Y-polarization data are obtained. Data outputted through interpolation in the clock synchronization module is filtered adaptively, and then the error signals are fed back to the clock synchronization module, so that coefficients are adjusted slowly and the error signals approach zero. The interpolation may be implemented by various interpolation algorithms, such as Lagrange interpolation algorithm. The specific implementation of the clock synchronization module and the specific implementation of the interpolation are not intended to limit the scope of the present invention, and will not be described here.

In embodiments of the present invention, error signals are generated for X-polarization data and Y-polarization data separately so that the X-polarization data and the Y-polarization data can be adjusted separately.

It can be seen from the adaptive equalizer provided by embodiments of the present invention that the X-polarization error signal and the Y-polarization error signal are considered when errors are calculated, and X-polarization data and Y-polarization data are adjusted separately, and thereby an X-polarization coefficient and a Y-polarization coefficient are flexibly and effectively controlled to approach a tap center.

In an exemplary embodiment, the coefficient control module is further configured to detect energy of coefficients for mapping H and V onto X and energy of coefficients for mapping H and V onto Y, to determine whether to adjust integer sampling points of the coefficients when the energy of coefficients is at a tap edge; and, if the integer sampling points of the coefficients need to be adjusted, to output an adjustment instruction to the coefficient generation module to adjust the coefficients and to the data output module to adjust data to be outputted.

Here the adjustment instruction for the coefficients is fed back to the coefficient generation module and the data output module for adjusting the coefficients and the data to be outputted, preventing offsets of system frames.

Accordingly, the coefficient generation module is further configured to adjust the coefficients generated by the coefficient generation module according to the adjustment instruction from the coefficient control module; and the data output module is further configured to adjust the data to be outputted according to the adjustment instruction from the coefficient control module.

The energy *px(m)* of coefficients for mapping H and V onto X and the energy *py(m)* of coefficients for mapping H and V onto Y are calculated according to a formula (7) and a formula (8) respectively:

$$px(m) = |c_{xh}(m)|^n + |c_{xv}(m)|^n \qquad (7)$$

$$py(m) = |c_{yh}(m)|^n + |c_{yv}(m)|^n \qquad (8)$$

a value range of m is [1, M] and n denotes a positive integer.

The determining whether to adjust the integer sampling points of the coefficients includes the following steps:

when a ratio of energy of any one of front several taps for the *px(m)* to total energy is greater than a preset first threshold thrl, a ratio of energy of rear two taps, that are to be removed, for the *px(m)* to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;

when a ratio of energy of any one of rear several taps for the px(m) to the total energy is greater than the first threshold thrl, a ratio of energy of front two taps, that are to be removed, for the px(m) to the total energy is less than the second threshold thr2, and a ratio of energy of new front taps to the total energy is less than the third threshold thr3 after the front two taps are removed, the cost for roughly adjusting the coefficient is determined to be lower than the cost for not roughly adjusting the coefficient and an adjustment instruction for roughly adjusting the coefficient leftwards is generated.

Similarly, a processing of the py(m) is the same as the above-mentioned processing of the px(m), which are separate from each other. Specifically:

when a ratio of energy of any one of front several taps for the py(m) to total energy is greater than a preset first threshold thrl, a ratio of energy of rear two taps, that are to be removed, for the py(m) to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;
when a ratio of energy of any one of rear several taps for the py(m) to the total energy is greater than the first threshold thr1, a ratio of energy of front two taps, that are to be removed, for the py(m) to the total energy is less than the second threshold thr2, and a ratio of energy of new front taps to the total energy is less than the third threshold thr3 after the front two taps are removed, the cost for roughly adjusting the coefficient is determined to be lower than the cost for not roughly adjusting the coefficient and an adjustment instruction for roughly adjusting the coefficient leftwards is generated.

In an exemplary embodiment, the coefficient control module is further configured to calculate the barycenter xc_mass of coefficients for mapping H and V onto X and the barycenter yc_mass of coefficients for mapping H and V onto Y, calculate a maximum value of the barycenter xc_mass and a maximum value the barycenter yc_mass in a certain period, calculate a difference value between the maximum values of the barycenter xc_mass and the barycenter yc_mass, and determine whether to adjust integer sampling points of the coefficients based on the difference value; and if the integer sampling points of the coefficients need to be adjusted, output an adjustment instruction to the coefficient generation module to adjust the coefficients and to the data output module to adjust data to be outputted.

Specifically, when the difference value between the two maximum values is greater than a preset fourth threshold thr4, an adjustment instruction for adjusting X-polarization coefficients leftwards and adjusting Y-polarization coefficients rightwards is generated; and when the difference value between the two maximum barycenter values is less than a preset fifth threshold -thr4, an adjustment instruction for adjusting the X-polarization coefficients rightwards and adjusting the Y-polarization coefficients leftwards are generated.

The first threshold thr1, the second threshold thr2, the third threshold thr3 and the fourth threshold thr4 may be configured in registers.

In an exemplary embodiment, when a system converges initially, since an adaptive equalizer is in a blind adaptation process, coefficients should be proactively roughly adjusted and intervened in, and in this case, according to the solution of the present invention, a first threshold thr1, a second threshold thr2, a third threshold thr3 and a fourth threshold thr4 may be set loosely; and when the system works steadily except for a sudden change in a channel, intervention in the coefficients should be reduced, and in this case, the first threshold thr1, the second threshold thr2, the third threshold thr3 and the fourth threshold thr4 may be set strictly. Here terms "loosely" and "strictly" are relatively loosely and relatively strictly. Loosely is relative to a case where the system works stably. That is, when the system converges initially and the system works stably, the first threshold thr1 is set to a relatively small value, the second threshold thr2 is set to a relatively large value and the third threshold thr3 is set to a relatively small value. Specific settings can be adjusted by those skilled in the art according to actual application scenarios. Here the determination is not intended to limit the scope of the present invention.

Specifically, the coefficient generation module is further configured, according to the adjustment instruction, to: when the adjustment instruction is used for roughly adjusting coefficients leftwards, perform a process of

$$c_{xh}{}'(m) = \begin{cases} c_{xh}(m+1) & m = 1, \cdots, M-1 \\ 0 & m = M \end{cases}$$ and perform the same process to $c_{xv}{}'(m)$; and when the adjustment instruction is used for roughly adjusting the coefficients rightwards, perform a process of

$$c_{xh}'(m) = \begin{cases} c_{xh}(m+1) & m = 1, \cdots, M-1 \\ 0 & m = M \end{cases}$$ and perform the same process to $c_{xv}'(m)$; or, when the adjustment instruction is used for roughly adjusting the coefficients leftwards, remove front two sampling points for the coefficients; and when the adjustment instruction is used for roughly adjusting the coefficients rightwards, remove rear two sampling points for the coefficients.

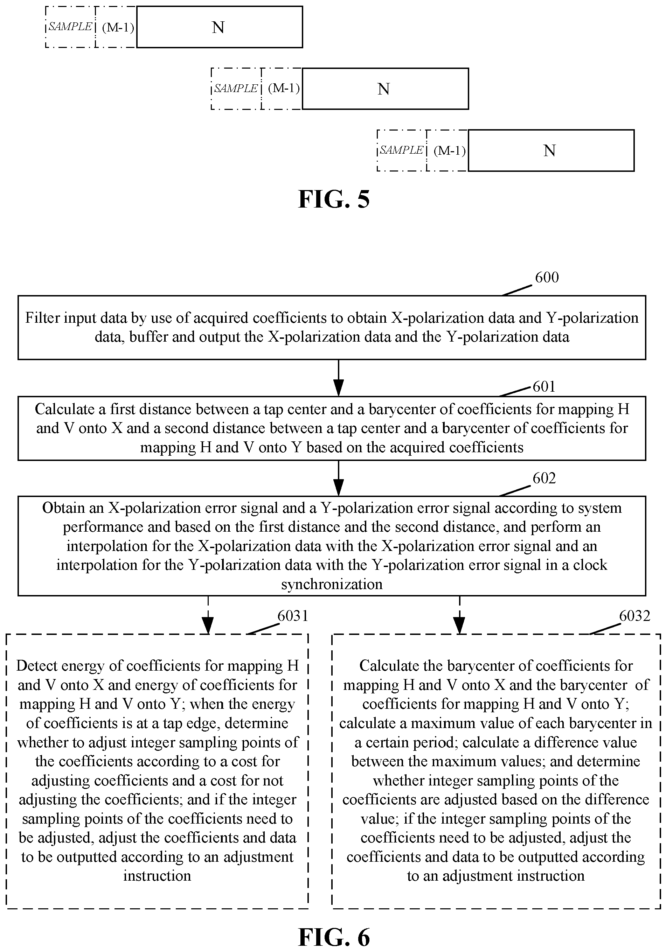

Here it is assumed that a length of FIR output data in adaptive equalization is N. Data combination is performed using a method illustrated in FIG. 5. That is, FIR filtering is performed by a combination of FIR data in the current clock tick, rear (M - 1) data in the previous clock tick and a sample number of data.

In an example, a data output module is further configured to perform the following steps:

when the adjustment instruction is not received, which indicates that there is no need to adjust the coefficients, the adaptive equalizer outputs rear N of (N + samp) data points; when the adjustment instruction is used for roughly adjusting the coefficients rightwards, the adaptive equalizer outputs rear (N - samp) of the (N + samp) data points; and when the adjustment instruction is used for roughly adjusting the coefficients leftwards, the adaptive equalizer outputs rear (N + samp) of the (N + samp) data points;

The data to be outputted is buffered and the data with a fixed length of N is outputted.

FIG. 6 is a flowchart of an adaptive equalization method of an adaptive equalizer according to an embodiment of the present invention. As illustrated in FIG. 6, the method includes steps described below.

In step 600, input data is filtered by use of acquired coefficients to obtain X-polarization data and Y-polarization data, the X-polarization data and the Y-polarization data are buffered and outputted.

Before this step, the method further includes that the coefficients are generated. The coefficients include a coefficient $c_{xh}(m)$ for mapping H onto X, a coefficient $c_{xv}(m)$ for mapping V onto X, a coefficient $c_{yh}(m)$ for mapping H onto Y and a coefficient $c_{yv}(m)$ for mapping V onto Y.

In this step, the input data is filtered as described below.

Assuming that an FIR filter is used, the filtering is denoted as the above-mentioned formulas (1) and (2). These formulas will not be described here.

In step 601, a first distance between a tap center and a barycenter of coefficients for mapping H and V onto X and a second distance between a tap center and a barycenter of coefficients for mapping H and V onto Y are calculated based on the acquired coefficients.

In this step, the barycenter $xc\_mass$ of coefficients for mapping H and V onto X and the barycenter $yc\_mass$ of coefficients for mapping H and V onto Y are calculated according to the above-mentioned formulas (3) and (4) respectively. These formulas will not be described here.

In this step, the first distance $xc\_dsc$ between the tap center and the barycenter $xc\_mass$ of coefficients for mapping H and V onto X and the second distance $yc\_dsc$ between the tap center and the barycenter $yc\_mass$ of coefficients for mapping H and V onto Y are calculated according to the above-mentioned formulas (5) and (6) respectively. These formulas will not be described here.

In step 602, an X-polarization error signal and a Y-polarization error signal are obtained according to system performance and based on the first distance and the second distance, and an interpolation for the X-polarization data with the X-polarization error signal and an interpolation for the Y-polarization data with the Y-polarization error signal are performed in a clock synchronization.

In this step, the X-polarization error signal and the Y-polarization error signal may be generated by use of a first-order filter loop, a second-order filter loop, or a filter loop plus an integrator circuit at an output of the filter loop according to system features, i.e., requirements on system performance. Specific filter parameters are determined by the jitter feature of a system clock. FIG. 4 is a schematic diagram illustrating how error signals outputted by an adaptive equalizer are used for clock synchronization according to an embodiment of the present invention. As illustrated in FIG. 4, the X-polarization error signal cx_err and the Y-polarization error signal cy_err are fed back to an existing clock synchronization module for processing, and a sum of a clock error signal clk_err extracted by the clock synchronization module and the X-polarization error signal cx_err and a sum of the clock error signal clk_err extracted by the clock synchronization module and the Y-polarization error signal cy_err are calculated so that a total X-polarization error signal x_err for the X-polarization data and a total Y-polarization error signal y_err for the Y-polarization data are obtained. Data outputted through interpolation in the clock synchronization module is filtered adaptively, and then the error signals are fed back to the clock synchronization module, so that coefficients are adjusted slowly and the error signals approach zero. The interpolation may be implemented by various interpolation algorithms, such as the Lagrange interpolation algorithm. The specific implementation of the clock synchronization module and the specific implementation of the interpolation are not intended to limit the scope of the present invention, and will not be described here.

In the present embodiment, the error signals are generated separately for the X-polarization data and the Y-polarization data so that the X-polarization data and the Y-polarization data can be adjusted separately.

It can be seen from the adaptive equalization method provided by embodiments of the present invention that the X-polarization error signal and the Y-polarization error signal are considered when errors are calculated, and the X-polarization data and the Y-polarization data are adjusted separately, and thereby an X-polarization coefficient and a Y-polarization coefficient are flexibly and effectively controlled to approach the tap center.

The method further includes a step 6031.

In step 6031, energy of coefficients for mapping H and V onto X and energy of coefficients for mapping H and V onto Y are detected; when the energy of coefficients is at a tap edge, whether to adjust integer sampling points of the coefficients is determined according to a cost for adjusting coefficients and a cost for not adjusting the coefficients; and if the integer sampling points of the coefficients need to be adjusted, the coefficients and data to be outputted are adjusted according to an adjustment instruction.

Here the adjustment instruction for the coefficients is fed back to the coefficient generation module and the data output module for adjusting the coefficients and the data to be outputted, preventing offsets of system frames.

The energy $px(m)$ of coefficients for mapping H and V onto X and the energy $py(m)$ of coefficients for mapping H and V onto Y are calculated according to the above-mentioned formulas (7) and (8) respectively. These formulas will not be described here.

Whether to adjust the integer sampling points of the coefficients is determined as follows:

when a ratio of energy of any one of front several taps for the $px(m)$ to total energy is greater than a preset first threshold thrl, a ratio of energy of rear two taps, that are to be removed, for the $px(m)$ to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;

when a ratio of energy of any one of rear several taps for the $px(m)$ to the total energy is greater than the first threshold thrl, a ratio of energy of front two taps, that are to be removed, for the $px(m)$ to the total energy is less than the second threshold thr2, and a ratio of energy of new front taps to the total energy is less than the third threshold thr3 after the front two taps are removed, the cost for roughly adjusting the coefficient is determined to be lower than the cost for not roughly adjusting the coefficient and an adjustment instruction for roughly adjusting the coefficient leftwards is generated.

Similarly, a processing of the $py(m)$ is the same as the above-mentioned processing of the $px(m)$, which are separate from each other. Specifically:

when a ratio of energy of any one of front several taps for the $py(m)$ to total energy is greater than a preset first threshold thr1, a ratio of energy of rear two taps, that are to be removed, for the $py(m)$ to the total energy is less than a preset second threshold thr2, and a ratio of energy of new rear taps to the total energy is less than a preset third threshold thr3 after the rear two taps are removed, a cost for roughly adjusting a coefficient is determined to be lower than a cost for not roughly adjusting the coefficient and an adjustment instruction for roughly adjusting the coefficient rightwards is generated;

when a ratio of energy of any one of rear several taps for the $py(m)$ to the total energy is greater than the first threshold thrl, a ratio of energy of front two taps, that are to be removed, for the $py(m)$ to the total energy is less than the second threshold thr2, and a ratio of energy of new front taps to the total energy is less than the third threshold thr3 after the front two taps are removed, then the cost for roughly adjusting the coefficient is determined to be lower than the cost for not roughly adjusting the coefficient and an adjustment instruction for roughly adjusting the coefficient leftwards is generated.

The coefficient is adjusted according to the adjustment instruction as follows:

when the adjustment instruction is used for roughly adjusting coefficients leftwards, a process of

$$c_{xh}'(m) = \begin{cases} c_{xh}(m+1) & m = 1,\cdots,M-1 \\ 0 & m = M \end{cases}$$

is performed and the same process is performed to $c_{xv}'(m)$; and

when the adjustment instruction is used for roughly adjusting the coefficients rightwards, a process of

$$c_{xh}'(m) = \begin{cases} 0 & m = 1 \\ c_{xh}(m-1) & m = 2,\cdots,M \end{cases}$$ is performed and the same process is performed to $c_{xv}'(m)$;

or, when the adjustment instruction is used for roughly adjusting the coefficients leftwards, front two sampling points for the coefficients are removed; and when the adjustment instruction is used for roughly adjusting the coefficients rightwards, rear two sampling points for the coefficients are removed.

Here it is assumed that a length of FIR output data in adaptive equalization is N. Data combination is performed using a method illustrated in FIG. 5. That is, FIR filtering is performed by a combination of FIR data in the current clock tick, rear (M - 1) data in the previous clock tick and a sample number of data.

In an exemplary embodiment, the data to be outputted is adjusted according to the adjustment instruction as follows:

when the adjustment instruction is not received, which indicates that there is no need to adjust the coefficients, the adaptive equalizer outputs rear N of (N + samp) data points; when the adjustment instruction is used for roughly adjusting the coefficients rightwards, the adaptive equalizer outputs rear (N - samp) of the (N + samp) data points; and when the adjustment instruction is used for roughly adjusting the coefficients leftwards, the adaptive equalizer outputs rear (N + samp) of the (N + samp) data points;
the data to be outputted is buffered and the data with a fixed length of N is outputted.

In an exemplary embodiment, the method further includes a step 6032.

In step 6032, the barycenter $xc\_mass$ of coefficients for mapping H and V onto X and the barycenter $yc\_mass$ of coefficients for mapping H and V onto Y are calculated; a maximum value of the barycenter $xc\_mass$ and a maximum value of the barycenter $xc\_mass$ are calculated in a certain period; a difference value between the maximum values of the barycenter $xc\_mass$ and the barycenter $xc\_mass$ is calculated; and whether integer sampling points of the coefficients are adjusted is determined based on the difference value; if the integer sampling points of the coefficients need to be adjusted, the coefficients and data to be outputted is adjusted according to an adjustment instruction. This step is performed as follows:

when the difference value between the two maximum values of the barycenters is greater than a preset fourth threshold thr4, an adjustment instruction for adjusting X-polarization coefficients leftwards and adjusting Y-polarization coefficients rightwards is generated; and when the difference value between the two maximum values of the barycenters is less than a preset fifth threshold -thr4, an adjustment instruction for adjusting the X-polarization coefficients rightwards and adjusting the Y-polarization coefficients leftwards is generated. This well prevents the barycenters of the coefficients from offsetting to an edge.

The first threshold thr1, the second threshold thr2, the third threshold thr3 and the fourth threshold thr4 may be configured in registers.

In an exemplary embodiment, the method further includes a step described below.

When a system converges initially, since the adaptive equalizer is in a blind adaptation process, coefficients should be proactively roughly adjusted and intervened in, and in this case, according to the solution of the present invention, the first threshold thrl, the second threshold thr2, the third threshold thr3 and the fourth threshold thr4 may be set loosely; and when the system works steadily except for a sudden change in a channel, intervention in the coefficients should be reduced, and in this case, the first threshold thrl, the second threshold thr2, the third threshold thr3 and the fourth threshold thr4 may be set strictly. This ensures to flexibly and effectively control the X-polarization coefficients and the Y-polarization coefficients to approach the tap center, and reduces the adjustment of the coefficients.

The solution provided by the present application will be described below in detail with reference to several examples in use.

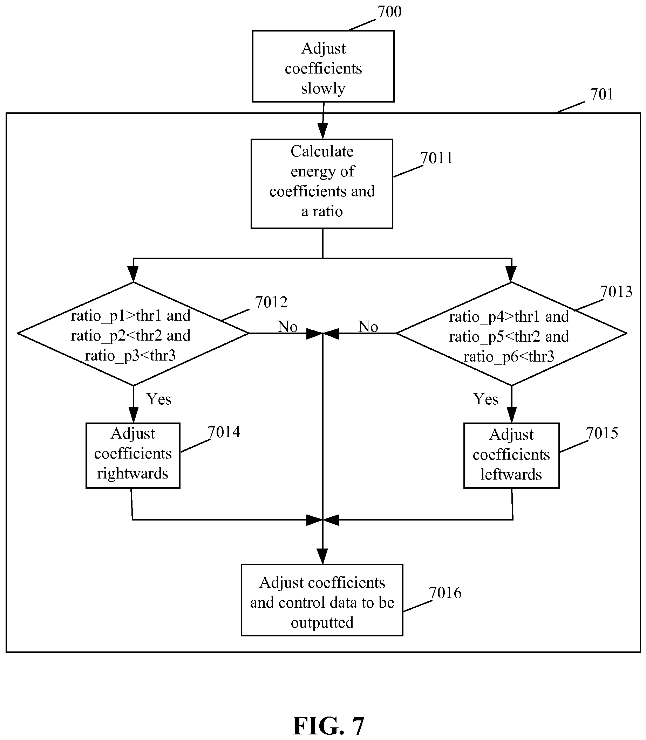

FIG. 7 is a flowchart of an adaptive equalization method according to a first example. The first example applies to a metropolitan area network (MAN). In a MAN scenario, PMD that needs to be resisted in a channel is small, and the number of orders of an adaptive equalizer is also small. In the first example, a nine-order FIR filter is used. Since the X-polarization and the Y-polarization are separate from each other, for ease of description, this example uses the X-polarization as an example. The X-polarization and the Y-polarization are processed in the same way. As illustrated in FIG. 7, the adaptive equalization method includes the steps described below.

In step 700, coefficients are adjusted slowly. The coefficients are adjusted slowly after an error signal is calculated through the coefficients and fed back to an interpolation in clock synchronization. This step includes the following steps:

a barycenter $xc\_mass$ of coefficients for mapping H and V onto X is calculated according to the above-mentioned formula (3);

a first distance between a tap center and the barycenter *xc_mass* of coefficients for mapping H and V onto X is calculated according to the above-mentioned formula (5), i.e., *xc_dsc=xc_mass-(M+1)/2=cx_mass-5*;

an error signal cx_err is calculated from the first distance. The error signal is calculated, according to requirements on system performance, in consideration of a first-order filter loop (e.g., cx_err(n)=para_prop*cx_dsc(n)), a second-order filter loop (e.g., fintg_loop(n)=fintg_loop(n-1)+para_fintg*cx_dsc(n)), or a filter loop plus an integrator circuit at an output of the filter loop (e.g., cx_err(n)= cx_err(n-1)+delta_cx_err), where delta_cx_err is output of the filter circuit, and the scaling factor para_prop and the integrating factor para fintg are determined by the jitter feature of a system clock;

a sum of a clock timing error clk_err and the error signal cx_err is calculated to obtain a total X-polarization error signal x_err for X-polarization data in the interpolation module in the clock synchronization. It is known to those skilled in the art that the interpolation module may be implemented by various interpolation algorithms, such as the Lagrange interpolation algorithm. Since the X-polarization and the Y-polarization are separate from each other in the present invention, X-polarization coefficients and Y-polarization coefficients are separately flexibly controlled to approach the tap center;

Data outputted by the interpolation module is filtered adaptively, and then the error signal is fed back to the clock synchronization unit, so that the coefficients are adjusted slowly and the error signal approaches zero.

In step 701, the coefficient is adjusted roughly. The energy feature of the coefficients is calculated to determine whether to adjust the coefficients roughly to adapt to a sudden change in the channel. As illustrated in FIG. 7, this step includes a step 7011.

Instep 7011:

energy px(m) of coefficients for mapping H and V onto X is calculated according to the above-mentioned formula (7), where the formula (7) will not be described here;

a ratio ratio_p1 = px(1)/sum(px(m)) of energy of front taps to total energy is calculated; a ratio ratio_p2 = (px(8) + px(9))/sum(px(m)) of energy of rear two taps, that may be removed, to the total energy is calculated; and, if the rear two taps are removed, a ratio ratio_p3 = px(7)/sum(px(m)) of energy of new rear taps to the total energy is calculated;

a ratio ratio_p4 = px(9)/sum(px(m)) of energy of rear taps to the total energy is calculated; a ratio ratio_p5 = (px(1) + px(2))/sum(px(m)) of energy of front two taps, that may be removed, to the total energy is calculated; and, if the front two taps are removed, a ratio ratio_p6 = px(3)/sum(px(m)) of energy of new front taps to the total energy is calculated.

In step 7012, whether formulas ratio_p1 > thrl, ratio_p2 < thr2 and ratio_p3 < thr3 apply is determined based on the energy feature and the ratio relations; the method proceeds to step 7014 if the formulas apply; and the method proceeds to step 7015 if the formulas do not apply.

In step 7013, whether formulas ratio_p4 > thrl, ratio_p5 < thr2 and ratio_p6 < thr3 apply is determined; the method proceeds to step 7016 if the formulas apply; and the method proceeds to step 7015 if the formulas do not apply.

In step 7014, it is determined that the coefficients and data to be outputted are adjusted rightwards by two sampling points, and then the method ends.

In step 7015, it is determined that the coefficients and the data to be outputted are adjusted leftwards by two sampling points. The thrl, thr2 and thr3 denote thresholds and may be configured in registers.

In step 7016, the coefficients are adjusted according to a coefficient offset direction and the filtered data to be outputted is outputted selectively.

Specifically, depending on system features, the coefficients may be roughly adjusted by one or two sampling points. The first example uses a rough adjustment of one sampling point as an example. When the coefficients are adjusted leftwards, a process of $c_{xh}'(m) = \begin{cases} c_{xh}(m+1) & m=1,\cdots,8 \\ 0 & m=9 \end{cases}$ is performed and the same process is per-

formed to $c_{xv}'(m)$; and when the coefficients are adjusted rightwards, a process of

$$c_{xh}'(m) = \begin{cases} 0 & m = 1 \\ c_{xh}(m-1) & m = 2, \cdots, 17 \end{cases}$$ is performed and the same process is performed to $c_{xv}'(m)$.

For ease of description, it is assumed that a length of FIR output data in adaptive equalization is N. Data combination is performed using a method illustrated in FIG. 5. That is, FIR filtering is performed by a combination of FIR data in the current clock tick, rear (M - 1) data in the previous clock tick and a sample number of data.

The data to be outputted is adjusted according to an adjustment instruction as follows: when the adjustment instruction is not received, which indicates that there is no need to adjust the coefficients, the adaptive equalizer outputs rear N of (N + samp) data points; when the adjustment instruction is used for roughly adjusting coefficients rightwards, the adaptive equalizer outputs rear (N - samp) of the (N + samp) data points; and when the adjustment instruction is used for roughly adjusting the coefficients leftwards, the adaptive equalizer outputs rear (N + samp) of the (N + samp) data points;

The data to be outputted is buffered and the data with a fixed length of N is outputted.

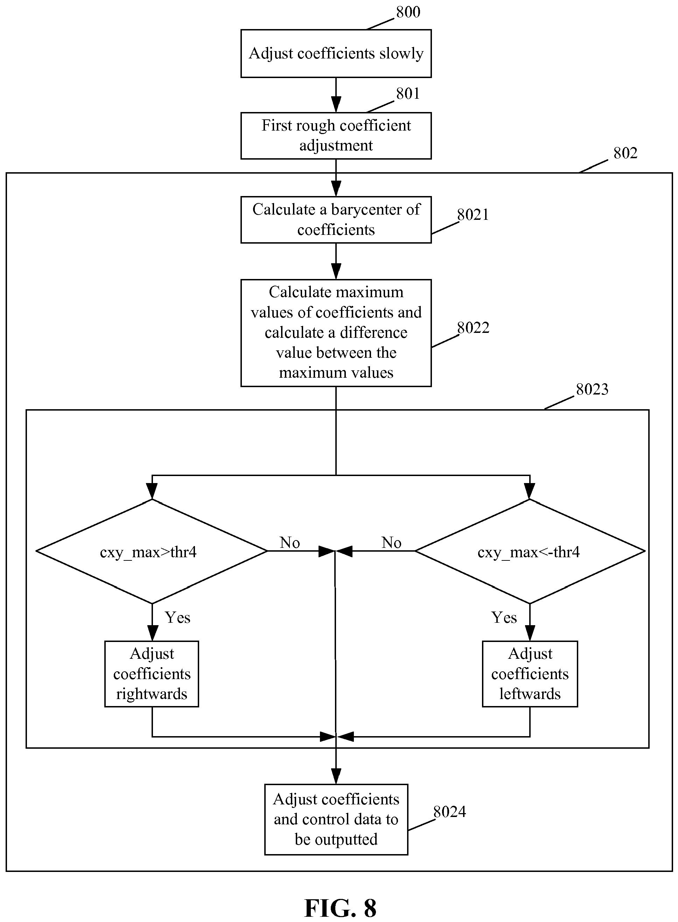

FIG. 8 is a flowchart of an adaptive equalization method according to a second example of the present invention. The second example applies to a backbone network. In a backbone network scenario, PMD that needs to be resisted in a channel is large, and the number of orders needed by an adaptive equalizer is also large. In the second example, a 17-order FIR filter is used. Since the X-polarization and the Y-polarization are separate from each other, for ease of description, this example uses the X-polarization as an example. The X-polarization and the Y-polarization are processed in the same way. As illustrated in FIG. 8, the adaptive equalization method includes the steps described below.

In step 800, coefficients are adjusted slowly. The coefficients are adjusted slowly after an error signal is calculated through the coefficients and fed back to an interpolation in clock synchronization. This step includes the following steps:

a barycenter $xc\_mass$ of coefficients for mapping H and V onto X is calculated according to the above-mentioned formula (3);

a first distance between a tap center and the barycenter $xc\_mass$ of coefficients for mapping H and V onto X is calculated according to the above-mentioned formula (5), i.e., $xc\_dsc = xc\_mass - (M+1)/2 = cx\_mass - 5$;

an error signal cx_err is calculated from the first distance. The error signal is calculated, according to requirements on system performance, in consideration of a first-order filter loop (e.g., cx_err(n)=para_prop*cx_dsc(n)), a second-order filter loop. (e.g., fintg_loop(n)=fintg_loop(n-1)+para_fintg*cx_dsc(n)), or a filter loop plus an integrator circuit at an output of the filter loop (e.g., cx_err(n)= cx_err(n-1)+delta_cx_err), where delta_cx_err is output of the filter circuit, and the scaling factor para_prop and the integrating factor para fintg are determined by the jitter feature of a system clock;

a sum of a clock timing error clk_err and the error signal cx_err is calculated to obtain a total X-polarization error signal x_err for X-polarization data in the interpolation module in the clock synchronization module. It is known to those skilled in the art that the interpolation module may be implemented by various interpolation algorithms, such as the Lagrange interpolation algorithm. Since the X-polarization and the Y-polarization are separate from each other, X-polarization coefficients and Y-polarization coefficients are separately flexibly controlled to approach the tap center;

Data outputted by the interpolation module is filtered adaptively, and then the error signal is fed back to the clock synchronization unit, so that the coefficients are adjusted slowly and the error signal approaches zero.

In step 801, a first rough coefficient adjustment is performed to resist a sudden change in the channel. The energy feature of the coefficients is calculated to determine whether to adjust the coefficients roughly to adapt to the sudden change in the channel. The specific implementation of this step is consistent with that of step 701 in the first example. As illustrated in FIG. 7, this step includes step 7011.

In step 7011:

energy px(m) of coefficients for mapping H and V onto X is calculated according to the above-mentioned formula (7), where the formula (7) will not be described here;

a ratio ratio_p1(n) = px(n)/sum(px(m)) of energy of front taps to total energy is calculated, where n denotes 1, 2 or 3; a ratio ratio_p2 = (px(16) + px(17))/sum(px(m)) of energy of rear two taps, that may be removed, to the total energy is calculated; and, if the rear two taps are removed, a ratio ratio_p3 = px(15)/sum(px(m)) of energy of new rear taps to the total energy is calculated;

a ratio ratio_p4(n) = px(n)/sum(px(m)) of energy of rear taps to the total energy is calculated, where n denotes 15, 16 or 17; a ratio ratio_p5 = (px(1) + px(2))/sum(px(m)) of energy of front two taps, that may be removed, to the total energy is calculated; and, if the front two taps are removed, a ratio ratio_p6 = px(3)/sum(px(m)) of energy of new front taps to the total energy is calculated.

In step 7012, whether formulas ratio_p1(1) > thrl or ratio_p1(2) > thrl or ratio_p1(3) > thrl, and ratio_p2 < thr2 and ratio_p3 < thr3 apply is determined based on the energy feature and the ratio relationships; the method proceeds to step 7014 if the formulas apply; and the method proceeds to step 7015 if the formulas do not apply.

In step 7013, whether formulas ratio_p4(1) > thr1 or ratio_p4(2) > thr1 or ratio_p4(3) > thrl, and ratio_p5 < thr2 and ratio_p6 < thr3 apply is determined; the method proceeds to step 7016 if the formulas apply; and the method proceeds to step 7015 if the formulas do not apply.

In step 7014, it is determined that the coefficient and the output data are adjusted rightwards by two sampling points, and then the method ends.

In step 7015, it is determined that the coefficients and the data to be outputted are adjusted leftwards by two sampling points.

In step 7016, the coefficients are adjusted according to a coefficient offset direction and the filtered data to be outputted is outputted selectively.

In step 802, a second rough coefficient adjustment is performed to prevent the barycenter of coefficients from offsetting to an edge. A difference value between a maximum value of a barycenter of the X-polarization coefficients and a maximum value of a barycenter of the Y-polarization coefficients is calculated to prevent the barycenter of coefficients from offsetting to the edge. As illustrated in FIG. 8, the adaptive equalization method includes the steps described below.

In step 8021, the barycenter $xc\_mass$ of coefficients for mapping of each of H and V onto X and the barycenter $yc\_mass$ of coefficients for mapping H and V onto Y are calculated.

In step 8022, the maximum value cx_max of $xc\_mass$ and the maximum value cy_max of $yc\_mass$ within a preset period are calculated, and the difference value between cx_max and cy_max is calculated, i.e., cxy_max = cx_max - cy_max is calculated.

In step 8023, when cxy_max > thr4, the X-polarization coefficients are adjusted rightwards by two sampling points and the Y-polarization coefficients are adjusted leftwards by two sampling points; and when cxy_max < -thr4, the X-polarization coefficients are adjusted leftwards by two sampling points and the Y-polarization coefficients are adjusted rightwards by two sampling points. The thr4 denotes a threshold and may be configured in a register.

In step 8024, the coefficients are adjusted according to the coefficient offset direction and the filter data to be outputted is outputted selectively to ensure no offsets of system frames. Specifically,

Depending on system features, one or two sampling points of the coefficients may be adjusted roughly. The second example uses a rough adjustment by one sampling point of the coefficients as an example. When coefficients are adjusted leftwards, a process of $c_{xh}{'}(m) = \begin{cases} c_{xh}(m+1) & m = 1, \cdots, 16 \\ 0 & m = 17 \end{cases}$ is performed and the same process is performed to $c_{xv}{'}(m)$; and when the coefficient is adjusted rightwards, a process of

$$c_{xh}{'}(m) = \begin{cases} 0 & m = 1 \\ c_{xh}(m-1) & m = 2, \cdots, 17 \end{cases}$$ is performed and the same process is performed to $c_{xv}{'}(m)$.

For ease of description, it is assumed that a length of FIR output data in adaptive equalization is N. Data combination is performed using a method illustrated in FIG. 5. That is, FIR filtering is performed by a combination of FIR data in the current clock tick, rear (M - 1) data in the previous clock tick and a sample number of data.

The data to be outputted is adjusted according to an adjustment instruction as follows:
when the coefficients are not adjusted, which indicates that there is no need to adjust the coefficients, the adaptive equalizer outputs rear N of (N + samp) data points; when the adjustment instruction is used for roughly adjusting the coefficients rightwards, the adaptive equalizer outputs rear (N - samp) of the (N + samp) data points; and when the adjustment instruction is used for roughly adjusting the coefficients leftwards, the adaptive equalizer outputs rear (N + samp) of the (N + samp) data points;

The data to be outputted is buffered and the data with a fixed length of N is outputted.

To ensure unity when a system converges initially and when the system works steadily, the following operations are performed: when the system converges initially, since the adaptive equalizer is in a blind adaptation process, the coefficients are proactively roughly adjusted and intervened in, and the thresholds are set loosely; when the system works steadily except for the sudden change in the channel, intervention in the coefficients is reduced, and the thresholds are set strictly.

Specifically, first of all, the first rough coefficient adjustment is performed to adjust the coefficient from the edge to the center as soon as possible. The energy feature of the coefficient is calculated to determine whether to adjust the coefficient roughly to adapt to the sudden change in the channel. The specific implementation of this step is consistent with that of step 701 in the first example, and will not be described here.

Unlike the first example, when the system converges initially, the thrl, thr2 and thr3 may be set loosely so that the X-polarization coefficients and the Y-polarization coefficients can be adjusted flexibly and conveniently and converged to the tap center as soon as possible; and when the system works steadily, the thrl, thr2 and thr3 may be set strictly so that the adjustment of the coefficients can be reduced.

Then, the second rough coefficient adjustment is performed to prevent the barycenter of coefficients from offsetting to the edge. The difference value between the maximum value of the barycenter of the X-polarization coefficients and the maximum value of the barycenter of the Y-polarization coefficients is calculated to prevent the barycenter of coefficients from offsetting to the edge. The specific implementation of this step is consistent with that of step 802 in the second example, and will not be described here.

Unlike the second example, when the system converges initially, the thr4 may be set loosely so that the X-polarization coefficients and the Y-polarization coefficients can be adjusted flexibly and conveniently and converged to the tap center as soon as possible; and when the system works steadily, the thr4 may be set strictly so that the adjustment of the coefficients can be reduced.

It will be understood by those of ordinary skill in the art that all or part of the steps in the above-mentioned embodiments and examples may be implemented using one or more computer programs. The computer programs may be stored in a computer readable storage medium and executed on a corresponding hardware platform (e.g., system, device, apparatus or component). During the execution of these programs, one of or a combination of the steps in the above-mentioned method embodiments is implemented.

Optionally, all or part of the steps in the above-mentioned embodiments may also be implemented using one or more integrated circuits. These steps may be made into integrated circuit modules separately, or part of these modules or steps may be made into a single integrated circuit module for implementation.

The various devices/function modules/function units in the above-mentioned embodiments may be implemented on a general-purpose computing device. They may be concentrated on a single computing device or distributed over a network composed of multiple computing devices.

The various devices/function modules/function units in the above-mentioned embodiments are implemented by software function modules, and can be stored in a computer-readable storage medium when sold or used as stand-alone products. The above-mentioned computer-readable storage medium may be a read-only memory, a magnetic disk or an optical disk, etc.

## INDUSTRIAL APPLICABILITY

Through the solution provided by embodiments of the present invention, error signals are separately generated for X-polarization data and Y-polarization data so that the X-polarization data and the Y-polarization data can be adjusted separately. An X-polarization error signal and a Y-polarization error signal are considered separately when errors are calculated, and X-polarization data and Y-polarization data are adjusted separately, and thereby X-polarization coefficients and Y-polarization coefficients are flexibly and effectively controlled to approach a tap center.

## Claims

1. An adaptive equalizer comprising a coefficient generation module, a filter module, a coefficient control module and a data output module, wherein the coefficient generation module is configured to calculate a plurality of coefficients required for filtering and to output the coefficients to the filter module and the coefficient control module;
the filter module is configured to filter input data composed of a horizontal polarization component H and a vertical polarization component V sent by a clock synchronization module by use of the coefficients to obtain X-polarization data and Y-polarization data, and to output the X-polarization data and the Y-polarization data to the data output module;
the data output module is configured to buffer and output the X-polarization data and the Y-polarization data; and **characterized in that** the coefficient control module is configured to calculate, based on the coefficients from the coefficient generation module, a first distance between a tap center and a barycenter of coefficients for mapping the horizontal polarization component, called H, and vertical polarization component, called V, onto X-polarization and a second distance between a tap center and a barycenter of coefficients for mapping H and V onto Y-polarization; to obtain an X-polarization error signal based on the first distance and obtain a Y-polarization error signal based on the second distance; and to feed back the X-polarization error signal and the Y-polarization error signal to the clock synchronization module for processing each of the polarization error signals by using a clock error signal extracted by the clock synchronization module, so that the clock synchronization module performs an interpolation for the horizontal polarization component H data with the processed X-polarization error signal and an interpolation for the vertical polarization component V data with the processed Y-polarization error signal in a clock synchronization, wherein the coefficients comprise a coefficient $c_{xh}(m)$ for mapping H onto X-polarization, a coefficient $c_{xv}(m)$ for mapping V onto X-polarization, a coefficient $c_{yh}(m)$ for mapping H onto Y-polarization, and a coefficient $c_{yv}(m)$ for mapping V onto Y-polarization;

wherein using the coefficient control module to calculate the first distance and the second distance comprises:

calculating the barycenter $xc\_mass$ of coefficients for mapping H and V onto X-polarization according to a formula

$$xc\_mass = \sum_{m=1}^{M}\left(m \times |c_{xh}(m)|^n + m \times |c_{xv}(m)|\right) \bigg/ \sum_{m=1}^{M}\left(|c_{xh}(m)|^n + |c_{xv}(m)|\right);$$

calculating the barycenter $yc\text{-}mass$ of coefficients for mapping H and V onto Y-polarization according to a formula

$$yc\_mass = \sum_{m=1}^{M}\left(m \times |c_{yh}(m)|^n + m \times |c_{yv}(m)|\right) \bigg/ \sum_{m=1}^{M}\left(|c_{yh}(m)|^n + |c_{yv}(m)|\right);$$

calculating the first distance $xc\_dsc$ between the tap center and the barycenter $xc\_mass$ of coefficients for mapping H and V onto X-polarization according to a formula $xc\_dsc=xc\_mass-(M+1)12$; and

calculating the second distance $yc\_dsc$ between the tap center and the barycenter $yc\_mass$ of coefficients for mapping H and V onto Y-polarization according to a formula $yc\_dsc=yc\_mass-(M+1)/2$, M represents a number of taps for the FIR filter and n represents a positive integer;

wherein using the coefficient control module to obtain the X-polarization error signal and the Y-polarization error signal comprises:

generating the X-polarization error signal based on the first distance by use of a first-order filter loop, a second-order filter loop, or a filter loop plus an integrator circuit at an output of the filter loop according to requirements on system performance ; and

generating the Y-polarization error signal based on the second distance by use of a first-order filter loop, a second-order filter loop, or a filter loop plus an integrator circuit at an output of the filter loop according to requirements on system performance.

2. The adaptive equalizer of claim 1, wherein the filter module is a finite impulse response (FIR) filter.

3. The adaptive equalizer of claim 2, wherein the coefficient generation module is implemented by a blind detection algorithm.

4. The adaptive equalizer of claim 1, wherein using the coefficient control module to feed back the X-polarization error signal and the Y-polarization error signal to an clock synchronization module for processing, so that the clock synchronization module performs the interpolation for the X-polarization data with the X-polarization error signal and the interpolation for the Y-polarization data with the Y-polarization error signal in the clock synchronization comprises: feeding back the X-polarization error signal cx_err and the Y-polarization error signal cy_err to an clock synchronization module for processing, and the clock synchronization module calculates a sum of a clock error signal clk_err extracted by the clock synchronization module and the X-polarization error signal cx_err to obtain a total X-polarization error signal x_err for the X-polarization data, and a sum of the clock error signal clk_err extracted by the clock synchronization module and the Y-polarization error signal cy_err to obtain a total Y-polarization error signal y_err for the Y-polarization data.

5. The adaptive equalizer of claim 1, wherein
the coefficient control module is further configured to detect energy of coefficients for mapping H and V onto X-polarization and energy of coefficients for mapping H and V onto Y-polarization, to determine whether to adjust integer sampling points of the coefficients when the energy of coefficients is at a tap edge, and when the integer sampling points need to be adjusted, to output an adjustment instruction to the coefficient generation module and the data output module;
the coefficient control module is further configured to adjust coefficients generated by the coefficient control module according to the adjustment instruction from the coefficient control module; and

the data output module is further configured to adjust data to be outputted according to the adjustment instruction from the coefficient control module.

6. The adaptive equalizer of claim 5, wherein

the energy $px(m)$ of coefficients for mapping H and V onto X-polarization is calculated according to a formula $px(m) = | c_{xh}(m) |^n + | c_{xv}(m) |^n$;

the energy $py(m)$ of coefficients for mapping H and V onto Y-polarization is calculated according to a formula $py(m) = |c_{yh}(m)|^n + |c_{yv}(m)|^n$,

wherein a value range of m is [1, M] and n denotes a positive integer; and

determining whether to adjust the integer sampling points of the coefficients comprises:

when a ratio of energy of any one of front several taps for the energy $px(m)$ of coefficients for mapping H and V onto X-polarization /the energy $py(m)$ of coefficients for mapping H and V onto Y-polarization to total energy is greater than a preset first threshold thrl, a ratio of energy of rear two taps, that are to be removed, for the $px(m)$ /the $py(m)$ to the total energy is less than a preset second threshold thr2, and a ratio of energy of new rear taps to the total energy is less than a preset third threshold thr3 after the rear two taps are removed, determining a cost for roughly adjusting a coefficient to be lower than a cost for not roughly adjusting the coefficient and generating an adjustment instruction for roughly adjusting the coefficient rightwards; and

when a ratio of energy of any one of rear several taps for the energy $px(m)$ of coefficients for mapping H and V onto X-polarization /the energy $py(m)$ of coefficients for mapping H and V onto Y-polarization to the total energy is greater than the first threshold thrl, a ratio of energy of front two taps, that are to be removed, for the $px(m)$ /the $py(m)$ to the total energy is less than the second threshold thr2, and a ratio of energy of new front taps to the total energy is less than the third threshold thr3 after the front two taps are removed, determining the cost for roughly adjusting the coefficient to be lower than the cost for not roughly adjusting the coefficient and generating an adjustment instruction for roughly adjusting the coefficient leftwards.

7. The adaptive equalizer of claim 1, wherein the coefficient control module is further configured to:

calculate the barycenter $xc\_mass$ of coefficients for mapping H and V onto X-polarization and the barycenter $yc\_mass$ of coefficients for mapping H and V onto Y-polarization, calculate a maximum value of the barycenter $xc\_mass$ and a maximum value of the barycenter $yc\_mass$ in a certain period, calculate a difference value between the maximum values of the barycenter $xc\_mass$ and the barycenter $yc\text{-} mass$, determine whether to adjust integer sampling points of the coefficients based on the difference value; and

when the integer sampling points of the coefficients need to be adjusted, output an adjustment instruction to the coefficient generation module to adjust the coefficients and to the data output module to adjust data to be outputted.

8. The adaptive equalizer of claim 7, wherein the determining whether to adjust the integer sampling points of the coefficients comprises:

when the difference value between the maximum value of the barycenter $xc\_mass$ of coefficients for mapping H and V onto X-polarization and the maximum value of the barycenter $yc\_mass$ of coefficients for mapping H and V onto Y-polarization is greater than a preset fourth threshold thr4, generating an adjustment instruction for adjusting X-polarization coefficients leftwards and adjusting Y-polarization coefficients rightwards; and

when the difference value between the maximum value of the barycenter $xc\_mass$ of coefficients for mapping H and V onto X-polarization and the maximum value of the barycenter $yc\_mass$ of coefficients for mapping H and V onto Y-polarization is less than a preset fifth threshold -thr4, generating an adjustment instruction for adjusting the X-polarization coefficients rightwards and adjusting the Y-polarization coefficients leftwards.

9. The adaptive equalizer of claim 6 or 8, wherein

when a system works steadily except for a sudden change in a channel, a first threshold thrl, a second threshold thr2, a third threshold thr3 and a fourth threshold thr4 are respectively set greater than the first threshold thrl, the second threshold thr2, the third threshold thr3 and the fourth threshold thr4 that are set in response to the system converges initially.

10. The adaptive equalizer of claim 5 or 7, wherein the coefficient generation module is further configured, according to the adjustment instruction, to:

when the adjustment instruction is used for roughly adjusting coefficients leftwards, performing a process of

$$c_{xh}'(m) = \begin{cases} c_{xh}(m+1) & m = 1, \cdots, M-1 \\ 0 & m = M \end{cases}$$

and performing the same process to $c_{xv}'(m)$ and when the adjustment instruction is used for roughly adjusting the coefficients rightwards, performing a process of

$$c_{xh}'(m) = \begin{cases} c_{xh}(m+1) & m = 1, \cdots, M-1 \\ 0 & m = M \end{cases}$$

and performing the same process to $c_{xv}'(m)$; or

when the adjustment instruction is used for roughly adjusting the coefficients leftwards, remove front two sampling points for the coefficients; and when the adjustment instruction is used for roughly adjusting the coefficients rightwards, remove rear two sampling points for the coefficients.

11. The adaptive equalizer of claim 5 or 7, wherein the data output module is further configured to:

when the adjustment instruction is not received, which indicates that there is no need to adjust the coefficients, enable the adaptive equalizer to output rear N of (N + samp) data points; when the adjustment instruction is used for roughly adjusting the coefficients rightwards, enable the adaptive equalizer to output rear (N - samp) of the (N + samp) data points; and when the adjustment instruction is used for roughly adjusting the coefficients leftwards, enable the adaptive equalizer to output rear (N + samp) of the (N + samp) data points; and buffer the data to be outputted and output the data with a fixed length of N, wherein N denotes a length of FIR output data.

12. An adaptive equalization method of an adaptive equalizer comprising:

filtering (600) input data composed of a horizontal polarization component H and a vertical polarization component V sent by a clock synchronization module by use of acquired coefficients to obtain X-polarization data and Y-polarization data, buffering and outputting the X-polarization data and the Y-polarization data; **characterized by**
calculating (601), based on the coefficients, a first distance between a tap center and a barycenter of coefficients for mapping the horizontal polarization component, called H, and vertical polarization component, called V, onto X-polarization and a second distance between a tap center and a barycenter of coefficients for mapping H and V onto Y-polarization; and
obtaining (602) an X-polarization error signal based on the first distance and a Y-polarization error signal based on the second distance according to system performance, and feeding back the X-polarization error signal and the Y-polarization error signal to the clock synchronization module for processing each of the polarization error signals by using a clock error signal extracted by the clock synchronization module, so that the clock synchronization module performs an interpolation for the horizontal polarization component H data with the processed X-polarization error signal and an interpolation for the vertical polarization component V data with the processed Y-polarization error signal in a clock synchronization;
wherein calculating the first distance and the second distance comprises:
calculating the barycenter *xc_mass* of coefficients for mapping H and V onto X-polarization according to a formula

$$xc\_mass = \sum_{m=1}^{M} \left( m \times \left| c_{xh}(m) \right|^n + m \times \left| c_{xv}(m) \right| \right) \bigg/ \sum_{m=1}^{M} \left( \left| c_{xh}(m) \right|^n + \left| c_{xv}(m) \right| \right);$$

calculating the barycenter *yc_mass* of coefficients for mapping H and V onto Y-polarization according to a formula

$$yc\_mass = \sum_{m=1}^{M} \left( m \times \left| c_{yh}(m) \right|^n + m \times \left| c_{yv}(m) \right| \right) \bigg/ \sum_{m=1}^{M} \left( \left| c_{yh}(m) \right|^n + \left| c_{yv}(m) \right| \right);$$

calculating the first distance *xc_dsc* between the tap center and the barycenter *xc_mass* of coefficients for mapping H and V onto X-polarization according to a formula

$$xc\_dsc = xc\_mass - (M+1)/2$$

and

calculating the second distance $yc\_dsc$ between the tap center and the barycenter $yc\_mass$ of coefficients for mapping H and V onto Y-polarization according to a formula $yc\_dsc = yc\_mass - (M+1)/2$, M denotes a number of taps for the FIR filter and n denotes a positive integer;
wherein obtaining the X-polarization error signal and the Y-polarization error signal comprises:

generating the X-polarization error signal based on the first distance by use of a first-order filter loop, a second-order filter loop, or a filter loop plus an integrator circuit at an output of the filter loop according to requirements on system performance ; and
generating the Y-polarization error signal based on the second distance by use of a first-order filter loop, a second-order filter loop, or a filter loop plus an integrator circuit at an output of the filter loop according to requirements on system performance;
wherein the coefficients comprise a coefficient $c_{xh}(m)$ for mapping H onto X-polarization, a coefficient $c_{xv}(m)$ for mapping V onto X-polarization, a coefficient $c_{yh}(m)$ for mapping H onto Y-polarization and a coefficient $c_{yv}(m)$ for mapping V onto Y-polarization.

13. The method of claim 12, wherein the step feeding back the X-polarization error signal and the Y-polarization error signal to the clock synchronization module for processing, so that the clock synchronization module performs an interpolation for the X-polarization data with the X-polarization error signal and an interpolation for the Y-polarization data with the Y-polarization error signal in a clock synchronization comprises:
feeding back the X-polarization error signal cx_err and the Y-polarization error signal cy_err to an clock synchronization module for processing, and the clock synchronization module calculates a sum of a clock error signal clk_err extracted by the clock synchronization module and the X-polarization error signal cx_err to obtain a total X-polarization error signal x_err for the X-polarization data, and a sum of the clock error signal clk_err extracted by the clock synchronization module and the Y-polarization error signal cy_err to obtain a total Y-polarization error signal y_err for the Y-polarization data.

14. The method of claim 12, further comprising:

detecting energy of coefficients for mapping H and V onto X-polarization and energy of coefficients for mapping H and V onto Y-polarization, and determining whether to adjust integer sampling points of the coefficients when the energy of coefficients is at a tap edge; and
when the integer sampling points need to be adjusted, adjusting the coefficients and data to be outputted according to an adjustment instruction.

15. The method of claim 14, wherein
the energy $px(m)$ of coefficients for mapping H and V onto X-polarization is calculated according to a formula $px(m) = |c_{xh}(m)|^n + |c_{xv}(m)|^n$;
the energy $py(m)$ of coefficients for mapping H and V onto Y-polarization is calculated according to a formula $py(m) = |c_{yh}(m)|^n + |c_{yv}(m)|^n$,
wherein a value range of m is [1, M] and n denotes a positive integer; and
determining whether to adjust the integer sampling points of the coefficients comprises:

when a ratio of energy of any one of front several taps for the energy $px(m)$ of coefficients for mapping H and V onto X-polarization /the energy $py(m)$ of coefficients for mapping H and V onto Y-polarization to total energy is greater than a preset first threshold thr1, a ratio of energy of rear two taps, that are to be removed, for the $px(m)$ /the $py(m)$ to the total energy is less than a preset second threshold thr2, and a ratio of energy of new rear taps to the total energy is less than a preset third threshold thr3 after the rear two taps are removed, determining a cost for roughly adjusting a coefficient to be lower than a cost for not roughly adjusting the coefficient and generating an adjustment instruction for roughly adjusting the coefficient rightwards; and
when a ratio of energy of any one of rear several taps for the energy $px(m)$ of coefficients for mapping H and V onto X-polarization /the energy $py(m)$ of coefficients for mapping H and V onto Y-polarization to the total energy is greater than the first threshold thr1, a ratio of energy of front two taps, that are to be removed, for the $px(m)$ /the $py(m)$ to the total energy is less than the second threshold thr2, and a ratio of energy of new front

**EP 3 316 535 B1**

taps to the total energy is less than the third threshold thr3 after the front two taps are removed, determining the cost for roughly adjusting the coefficient to be lower than the cost for not roughly adjusting the coefficient and generating an adjustment instruction for roughly adjusting the coefficient leftwards.

**Patentansprüche**

1. Adaptiver Entzerrer, der ein Koeffizientenerzeugungsmodul, ein Filtermodul, ein Koeffizientensteuermodul und ein Datenausgabemodul umfasst, wobei
das Koeffizientenerzeugungsmodul dazu ausgelegt ist, eine Vielzahl von Koeffizienten, die zum Filtern erforderlich sind, zu berechnen und die Koeffizienten an das Filtermodul und das Koeffizientensteuermodul auszugeben;
das Filtermodul dazu ausgelegt ist, Eingangsdaten, die aus einer horizontalen Polarisationskomponente H und einer vertikalen Polarisationskomponente V, die von einem Taktsynchronisationsmodul gesendet werden, bestehen, unter Verwendung der Koeffizienten zu filtern, um X-Polarisationsdaten und Y-Polarisationsdaten zu erhalten und die X-Polarisationsdaten und die Y-Polarisationsdaten an das Datenausgabemodul auszugeben;
das Datenausgabemodul dazu ausgelegt ist, die X-Polarisationsdaten und die Y-Polarisationsdaten zu puffern und auszugeben; und **dadurch gekennzeichnet, dass**
das Koeffizientensteuermodul dazu ausgelegt ist, auf Basis der Koeffizienten vom Koeffizientenerzeugungsmodul einen ersten Abstand zwischen einem Abgriffszentrum und einem Baryzentrum von Koeffizienten zum Abbilden der horizontalen Polarisationskomponente, die als H bezeichnet wird, und einer vertikalen Polarisationskomponente, die als V bezeichnet wird, auf einer X-Polarisation und einen zweiten Abstand zwischen einem Abgriffszentrum und einem Baryzentrum von Koeffizienten zum Abbilden von H und V auf einer Y-Polarisation zu berechnen; um auf Basis des ersten Abstands ein X-Polarisationsfehlersignal zu erhalten und auf Basis des zweiten Abstands ein Y-Polarisationsfehlersignal zu erhalten und um das X-Polarisationsfehlersignal und das Y-Polarisationsfehlersignal zum Verarbeiten von jedem der Polarisationsfehlersignale unter Verwendung eines Taktfehlersignals, das vom Taktsynchronisationsmodul extrahiert wird, an das Taktsynchronisationsmodul rückzumelden, derart, dass das Taktsynchronisationsmodul eine Interpolation für die horizontalen Polarisationskomponenten (H)-Daten mit dem verarbeiteten X-Polarisationsfehlersignal und eine Interpolation für die vertikalen Polarisationskomponenten (V)-Daten mit dem verarbeiteten Y-Polarisationsfehlersignal in einer Taktsynchronisation durchführt,
wobei die Koeffizienten einen Koeffizienten $c_{xh}(m)$ zum Abbilden von H auf einer X-Polarisation, einen Koeffizienten $c_{xv}(m)$ zum Abbilden von V auf einer X-Polarisation, einen Koeffizienten $c_{yh}(m)$ zum Abbilden von H auf einer Y-Polarisation und einen Koeffizienten $c_{yv}(m)$ zum Abbilden von V auf einer Y-Polarisation umfassen;
wobei das Verwenden des Koeffizientensteuermoduls, um den ersten Abstand und den zweiten Abstand zu berechnen, Folgendes umfasst:

Berechnen des Baryzentrums *xc_mass* von Koeffizienten zum Abbilden von H und V auf einer X-Polarisation gemäß einer Formel

$$xc\_mass = \sum_{m=1}^{M}\left(m \times \left|c_{xh}(m)\right|^{n} + m \times \left|c_{xv}(m)\right|\right)\Big/ \sum_{m=1}^{M}\left(\left|c_{xh}(m)\right|^{n} + \left|c_{xv}(m)\right|\right);$$

Berechnen des Baryzentrums *yc_mass* von Koeffizienten zum Abbilden von H und V auf einer Y-Polarisation gemäß einer Formel

$$yc\_mass = \sum_{m=1}^{M}\left(m \times \left|c_{yh}(m)\right|^{n} + m \times \left|c_{yv}(m)\right|\right)\Big/ \sum_{m=1}^{M}\left(\left|c_{yh}(m)\right|^{n} + \left|c_{yv}(m)\right|\right);$$

Berechnen des ersten Abstands *xc_dsc* zwischen dem Abgriffszentrum und dem Baryzentrum *xc_mass* von Koeffizienten zum Abbilden von H und V auf einer X-Polarisation gemäß einer Formel *xc_dsc = xc_mass - (M+1)/2*; und
Berechnen des zweiten Abstands *yc_dsc* zwischen dem Abgriffszentrum und dem Baryzentrum *yc_mass* von Koeffizienten zum Abbilden von H und V auf einer Y-Polarisation gemäß einer Formel *yc_dsc = yc_mass - (M+1)/2*, M repräsentiert eine Anzahl von Abgriffen für das FIR-Filter und n repräsentiert eine positive Ganzzahl;
wobei das Verwenden des Koeffizientensteuermoduls, um das X-Polarisationsfehlersignal und das Y-Polarisationsfehlersignal zu erhalten, Folgendes umfasst:

Erzeugen des X-Polarisationsfehlersignals auf Basis des ersten Abstandes unter Verwendung einer Filterschleife erster Ordnung, einer Filterschleife zweiter Ordnung oder einer Filterschleife plus einer Integratorschaltung an einem Ausgang der Filterschleife gemäß Anforderung an die Systemleistung; und Erzeugen des Y-Polarisationsfehlersignals auf Basis des zweiten Abstandes unter Verwendung einer Filterschleife erster Ordnung, einer Filterschleife zweiter Ordnung oder einer Filterschleife plus einer Integratorschaltung an einem Ausgang der Filterschleife gemäß Anforderung an die Systemleistung.

2. Adaptiver Entzerrer nach Anspruch 1, wobei das Filtermodul ein Filter mit endlicher Impulsantwort (FIR) ist.

3. Adaptiver Entzerrer nach Anspruch 2, wobei das Koeffizientenerzeugungsmodul durch einen Blinddetektionsalgorithmus implementiert wird.

4. Adaptiver Entzerrer nach Anspruch 1, wobei das Verwenden des Koeffizientensteuermoduls, um das X-Polarisationsfehlersignal und das Y-Polarisationsfehlersignal einem Taktsynchronisationsmodul zum Verarbeiten rückzumelden, derart, dass das Taktsynchronisationsmodul die Interpolation für die X-Polarisationsdaten mit dem X-Polarisationsfehlersignal und die Interpolation für die Y-Polarisationsdaten mit dem Y-Polarisationsfehlersignal bei der Taktsynchronisation durchführt, Folgendes umfasst: Rückmelden des X-Polarisationsfehlersignals cx_err und des Y-Polarisationsfehlersignals cy_err zum Verarbeiten zu einem Taktsynchronisationsmodul, und das Taktsynchronisationsmodul eine Summe eines Taktfehlersignals clk_err, das vom Taktsynchronisationsmodul extrahiert wird, und des X-Polarisationsfehlersignals cx_err berechnet, um ein gesamtes X-Polarisationsfehlersignal x_err für die X-Polarisationsdaten zu erhalten, und eine Summe des Taktfehlersignals clk_err, das vom Taktsynchronisationsmodul extrahiert wird, und des Y-Polarisationsfehlersignals cy_err, um ein gesamtes Y-Polarisationsfehlersignal y_err für die Y-Polarisationsdaten zu erhalten.

5. Adaptiver Entzerrer nach Anspruch 1, wobei
das Koeffizientensteuermodul ferner dazu ausgelegt ist, eine Energie von Koeffizienten zum Abbilden von H und V auf einer X-Polarisation und eine Energie von Koeffizienten zum Abbilden von H und V auf einer Y-Polarisation zu detektieren, um zu bestimmen, ob ganzzahlige Abtastpunkte der Koeffizienten anzupassen sind, wenn sich die Energie von Koeffizienten an einem Abgriffsrand befindet, und wenn die ganzzahligen Abtastpunkte angepasst werden müssen, eine Anpassungsanweisung an das Koeffizientenerzeugungsmodul und das Datenausgabemodul auszugeben;
das Koeffizientensteuermodul ferner dazu ausgelegt ist, Koeffizienten, die vom Koeffizientensteuermodul erzeugt werden, gemäß der Anpassungsanweisung vom Koeffizientensteuermodul anzupassen; und
das Datenausgabemodul ferner dazu ausgelegt ist, Daten, die gemäß der Anpassungsanweisung vom Koeffizientensteuermodul auszugeben sind, anzupassen.

6. Adaptiver Entzerrer nach Anspruch 5, wobei
die Energie $px(m)$ von Koeffizienten zum Abbilden von H und V auf einer X-Polarisation gemäß einer Formel $px(m) = | c_{xh}(m) |^n + | c_{xv}(m) |^n$ berechnet wird,
die Energie $py(m)$ von Koeffizienten zum Abbilden von H und V auf einer Y-Polarisation gemäß einer Formel $px(m) = | C_{yh}(m) |^n + | c_{yv}(m) |^n$ berechnet wird,
wobei ein Wertbereich von m [l, M] ist und n eine positive Ganzzahl bezeichnet; und
das Bestimmen, ob die ganzzahligen Abtastpunkte der Koeffizienten anzupassen sind, umfasst Folgendes:

wenn ein Verhältnis der Energie von beliebigen mehreren vorderen Abgriffen für die Energie $px(m)$ von Koeffizienten zum Abbilden von H und V auf einer X-Polarisation /die Energie $py(m)$ von Koeffizienten zum Abbilden von H und V auf einer Y-Polarisation zur Gesamtenergie größer ist als ein voreingestellter erster Schwellwert thr1, ein Verhältnis der Energie von zwei hinteren Abgriffen, die zu entfernen sind, für die $px(m)$ /die $py(m)$ zur Gesamtenergie kleiner ist als ein voreingestellter zweiter Schwellwert thr2 und ein Verhältnis der Energie von neuen hinteren Abgriffen zur Gesamtenergie kleiner ist als ein voreingestellter dritter Schwellwert thr3, nachdem die zwei hinteren Abgriffe entfernt wurden, Bestimmen von Kosten für das grobe Anpassen eines Koeffizienten derart, dass sie niedriger sind als Kosten für kein grobes Anpassen des Koeffizienten, und Erzeugen einer Anpassungsanweisung zum groben Anpassen des Koeffizienten nach rechts; und
wenn ein Verhältnis der Energie von beliebigen mehreren hinteren Abgriffen für die Energie $px(m)$ von Koeffizienten zum Abbilden von H und V auf einer X-Polarisation /die Energie $py(m)$ von Koeffizienten zum Abbilden von H und V auf einer Y-Polarisation zur Gesamtenergie größer ist als der erste Schwellwert thr1, ein Verhältnis der Energie von zwei vorderen Abgriffen, die zu entfernen sind, für die $px(m)$ /die $py(m)$ zur Gesamtenergie kleiner ist als der zweite Schwellwert thr2 und ein Verhältnis der Energie von neuen vorderen Abgriffen zur Gesamtenergie kleiner ist als der dritte Schwellwert thr3, nachdem die zwei vorderen Abgriffe entfernt wurden, Bestimmen der Kosten für das grobe Anpassen des Koeffizienten derart, dass sie niedriger sind als die Kosten für kein grobes Anpassen des Koeffizienten, und Erzeugen einer Anpassungsanweisung zum groben Anpassen des Koeffizienten nach links.

**7.** Adaptiver Entzerrer nach Anspruch 1, wobei das Koeffizientensteuermodul ferner zu Folgendem ausgelegt ist:

Berechnen des Baryzentrums $xc\_mass$ von Koeffizienten zum Abbilden von H und V auf einer X-Polarisation und des Baryzentrums $yc\_mass$ von Koeffizienten zum Abbilden von H und V auf einer Y-Polarisation, Berechnen eines Höchstwertes des Baryzentrums $xc\_mass$ und eines Höchstwertes des Baryzentrums $yc\_mass$ in einer bestimmten Periode, Berechnen eines Differenzwertes zwischen den Höchstwerten des Baryzentrums $xc\_mass$ und des Baryzentrums $yc\_mass$, Bestimmen auf Basis des Differenzwertes, ob ganzzahlige Abtastpunkte der Koeffizienten anzupassen sind; und
wenn die ganzzahligen Abtastpunkte der Koeffizienten angepasst werden müssen, Ausgeben einer Anpassungsanweisung an das Koeffizientenerzeugungsmodul, um die Koeffizienten anzupassen, und an das Datenausgabemodul, um Daten, die auszugeben sind, anzupassen.

**8.** Adaptiver Entzerrer nach Anspruch 7, wobei das Bestimmen, ob die ganzzahligen Abtastpunkte der Koeffizienten anzupassen sind, Folgendes umfasst:

wenn der Differenzwert zwischen dem Höchstwert des Baryzentrums $xc\_mass$ von Koeffizienten zum Abbilden von H und V auf einer X-Polarisation und dem Höchstwert des Baryzentrums $yc\_mass$ von Koeffizienten zum Abbilden von H und V auf einer Y-Polarisation größer ist als ein voreingestellter vierter Schwellwert thr4, Erzeugen einer Anpassungsanweisung zum Anpassen von X-Polarisationskoeffizienten nach links und Anpassen von Y-Polarisationskoeffizienten nach rechts; und
wenn der Differenzwert zwischen dem Höchstwert des Baryzentrums $xc\_mass$ von Koeffizienten zum Abbilden von H und V auf einer X-Polarisation und dem Höchstwert des Baryzentrums $yc\_mass$ von Koeffizienten zum Abbilden von H und V auf einer Y-Polarisation kleiner ist als ein voreingestellter fünfter Schwellwert -thr4, Erzeugen einer Anpassungsanweisung zum Anpassen der X-Polarisationskoeffizienten nach rechts und Anpassen der Y-Polarisationskoeffizienten nach links.

**9.** Adaptiver Entzerrer nach Anspruch 6 oder 8, wobei
wenn ein System, abgesehen von einer plötzlichen Änderung in einem Kanal, stetig arbeitet, werden ein erster Schwellwert thr1, ein zweiter Schwellwert thr2, ein dritter Schwellwert thr3 und ein vierter Schwellwert thr4 in Reaktion darauf, dass das System anfänglich konvergiert, jeweils größer eingestellt als der erste Schwellwert thr1, der zweite Schwellwert thr2, der dritte Schwellwert thr3 und der vierte Schwellwert thr4.

**10.** Adaptiver Entzerrer nach Anspruch 5 oder 7, wobei das Koeffizientenerzeugungsmodul gemäß der Anpassungsanweisung ferner zu Folgendem ausgelegt ist:

wenn die Anpassungsanweisung zum groben Anpassen von Koeffizienten nach links verwendet wird, Durchführen eines Prozesses $c_{xh}'(m) = \begin{cases} c_{xh}(m+1) & m = 1, \cdots, M-1 \\ 0 & m = M \end{cases}$ und Durchführen desselben Prozesses an $c_{xv}'(m)$; und wenn die Anpassungsanweisung zum groben Anpassen der Koeffizienten nach rechts verwendet wird, Durchführen eines Prozesses $c_{xh}'(m) = \begin{cases} c_{xh}(m+1) & m = 1, \cdots, M-1 \\ 0 & m = M \end{cases}$ und Durchführen desselben Prozesses an $c_{xv}'(m)$ oder

wenn die Anpassungsanweisung zum groben Anpassen der Koeffizienten nach links verwendet wird, Entfernen von zwei vorderen Abtastpunkten für die Koeffizienten; und wenn die Anpassungsanweisung zum groben Anpassen der Koeffizienten nach rechts verwendet wird, Entfernen von zwei hinteren Abtastpunkten für die Koeffizienten.

**11.** Adaptiver Entzerrer nach Anspruch 5 oder 7, wobei das Datenausgabemodul ferner zu Folgendem ausgelegt ist:

wenn die Anpassungsanweisung nicht empfangen wird, was anzeigt, dass die Koeffizienten nicht angepasst zu werden brauchen, Ermöglichen, dass der adaptive Entzerrer hintere N von (N + samp) Datenpunkten ausgibt; wenn die Anpassungsanweisung zum groben Anpassen der Koeffizienten nach rechts verwendet wird, Ermöglichen, dass der adaptive Entzerrer hintere (N - samp) der (N + samp) Datenpunkte ausgibt; und wenn die Anpassungsanweisung zum groben Anpassen der Koeffizienten nach links verwendet wird, Ermöglichen, dass der adaptive Entzerrer hintere (N + samp) der (N + samp) Datenpunkte ausgibt; und

Puffern der Daten, die auszugeben sind, und Ausgeben der Daten mit einer festen Länge von N, wobei N eine Länge von FIR-Ausgabedaten bezeichnet.

**12.** Adaptives Entzerrungsverfahren eines adaptiven Entzerrers, das Folgendes umfasst:

Filtern (600) von Eingangsdaten, die aus einer horizontalen Polarisationskomponente H und einer vertikalen Polarisationskomponente V, die von einem Taktsynchronisationsmodul gesendet werden, bestehen, unter Verwendung von erfassten Koeffizienten, um X-Polarisationsdaten und Y-Polarisationsdaten zu erhalten, Puffern und Ausgeben der X-Polarisationsdaten und der Y-Polarisationsdaten; **gekennzeichnet durch**

Berechnen (601) eines ersten Abstands zwischen einem Abgriffszentrum und einem Baryzentrum von Koeffizienten zum Abbilden der horizontalen Polarisationskomponente, die als H bezeichnet wird, und einer vertikalen Polarisationskomponente, die als V bezeichnet wird, auf einer X-Polarisation und eines zweiten Abstands zwischen einem Abgriffszentrum und einem Baryzentrum von Koeffizienten zum Abbilden von H und V auf einer Y-Polarisation auf Basis der Koeffizienten; und

Erhalten (602) eines X-Polarisationsfehlersignals auf Basis des ersten Abstands und eines Y-Polarisationsfehlersignals auf Basis des zweiten Abstands gemäß der Systemleistung und Rückmelden des X-Polarisationsfehlersignals und des Y-Polarisationsfehlersignals an das Taktsynchronisationsmodul zum Verarbeiten von jedem der Polarisationsfehlersignale unter Verwendung eines Taktfehlersignals, das vom Taktsynchronisationsmodul extrahiert wird, derart, dass das Taktsynchronisationsmodul eine Interpolation für die horizontalen Polarisationskomponenten(H)-Daten mit dem verarbeiteten X-Polarisationsfehlersignal und eine Interpolation für die vertikalen Polarisationskomponenten(V)-Daten mit dem verarbeiteten Y-Polarisationsfehlersignal in einer Taktsynchronisation durchführt;

wobei das Berechnen des ersten Abstands und des zweiten Abstands Folgendes umfasst:

Berechnen des Baryzentrums *xc_mass* von Koeffizienten zum Abbilden von H und V auf einer X-Polarisation gemäß einer Formel

$$xc\_mass = \sum_{m=1}^{M} \left( m \times \left| c_{xh}(m) \right|^n + m \times \left| c_{xv}(m) \right| \right) \Big/ \sum_{m=1}^{M} \left( \left| c_{xh}(m) \right|^n + \left| c_{xv}(m) \right| \right);$$

Berechnen des Baryzentrums *yc_mass* von Koeffizienten zum Abbilden von H und V auf einer Y-Polarisation gemäß einer Formel

$$yc\_mass = \sum_{m=1}^{M} \left( m \times \left| c_{yh}(m) \right|^n + m \times \left| c_{yv}(m) \right| \right) \Big/ \sum_{m=1}^{M} \left( \left| c_{yh}(m) \right|^n + \left| c_{yv}(m) \right| \right);$$

Berechnen des ersten Abstands *xc_dsc* zwischen dem Abgriffszentrum und dem Baryzentrum *xc_mass* von Koeffizienten zum Abbilden von H und V auf einer X-Polarisation gemäß einer Formel *xc_dsc* = *xc_mass* - (*M*+1)/2; und

Berechnen des zweiten Abstands *yc_dsc* zwischen dem Abgriffszentrum und dem Baryzentrum *yc_mass* von Koeffizienten zum Abbilden von H und V auf einer Y-Polarisation gemäß einer Formel *yc_dsc* = *yc_mass* - (*M*+1)/2, M bezeichnet eine Anzahl von Abgriffen für das FIR-Filter und n bezeichnet eine positive Ganzzahl;

wobei das Erhalten des X-Polarisationsfehlersignals und des Y-Polarisationsfehlersignals Folgendes umfasst:

Erzeugen des X-Polarisationsfehlersignals auf Basis des ersten Abstandes unter Verwendung einer Filterschleife erster Ordnung, einer Filterschleife zweiter Ordnung oder einer Filterschleife plus einer Integratorschaltung an einem Ausgang der Filterschleife gemäß Anforderung an die Systemleistung; und

Erzeugen des Y-Polarisationsfehlersignals auf Basis des zweiten Abstandes unter Verwendung einer Filterschleife erster Ordnung, einer Filterschleife zweiter Ordnung oder einer Filterschleife plus einer Integratorschaltung an einem Ausgang der Filterschleife gemäß Anforderung an die Systemleistung; wobei die Koeffizienten einen Koeffizienten $c_{xh}(m)$ zum Abbilden von H auf einer X-Polarisation, einen Koeffizienten $c_{xv}(m)$ zum Abbilden von V auf einer X-Polarisation, einen Koeffizienten $c_{yh}(m)$ zum Abbilden von H auf einer Y-Polarisation und einen Koeffizienten $c_{yv}(m)$ zum Abbilden von V auf einer Y-Polarisation umfassen.

13. Verfahren nach Anspruch 12, wobei der Schritt des Rückmeldens des X-Polarisationsfehlersignals und des Y-Polarisationsfehlersignals zum Verarbeiten an das Taktsynchronisationsmodul, derart, dass das Taktsynchronisationsmodul eine Interpolation für die X-Polarisationsdaten mit dem X-Polarisationsfehlersignal und eine Interpolation für die Y-Polarisationsdaten mit dem Y-Polarisationsfehlersignal bei einer Taktsynchronisation durchführt, Folgendes umfasst:
Rückmelden des X-Polarisationsfehlersignals cx_err und des Y-Polarisationsfehlersignals cy_err zum Verarbeiten an ein Taktsynchronisationsmodul, und das Taktsynchronisationsmodul eine Summe eines Taktfehlersignals clk_err, das vom Taktsynchronisationsmodul extrahiert wird, und des X-Polarisationsfehlersignals cx_err berechnet, um ein gesamtes X-Polarisationsfehlersignal x err für die X-Polarisationsdaten zu erhalten, und eine Summe des Taktfehlersignals clk_err, das vom Taktsynchronisationsmodul extrahiert wird, und des Y-Polarisationsfehlersignals cy_err, um ein gesamtes Y-Polarisationsfehlersignal y_err für die Y-Polarisationsdaten zu erhalten.

14. Verfahren nach Anspruch 12, das ferner Folgendes umfasst:

Detektieren einer Energie von Koeffizienten zum Abbilden von H und V auf einer X-Polarisation und einer Energie von Koeffizienten zum Abbilden von H und V auf einer Y-Polarisation und Bestimmen, ob ganzzahlige Abtastpunkte der Koeffizienten anzupassen sind, wenn sich die Energie von Koeffizienten an einem Abgriffsrand befindet; und
wenn die ganzzahligen Abtastpunkte angepasst werden müssen, Anpassen der Koeffizienten und der Daten, die auszugeben sind, gemäß einer Anpassungsanweisung.

15. Verfahren nach Anspruch 14, wobei
die Energie $px(m)$ von Koeffizienten zum Abbilden von H und V auf einer X-Polarisation gemäß einer Formel $px(m) = |\, c_{xh}(m)\, |^n + |\, c_{xv}(m)\, |^n$ berechnet wird;
die Energie $py(m)$ von Koeffizienten zum Abbilden von H und V auf einer Y-Polarisation gemäß einer Formel $py(m) = |\, c_{yh}(m)\, |^n + |\, c_{yv}(m)\, |^n$ berechnet wird;
wobei ein Wertebereich von m [l, M] ist und n eine positive Ganzzahl bezeichnet; und
das Bestimmen, ob die ganzzahligen Abtastpunkte der Koeffizienten anzupassen sind, umfasst Folgendes:

wenn ein Verhältnis der Energie von beliebigen mehreren vorderen Abgriffen für die Energie px(m) von Koeffizienten zum Abbilden von H und V auf einer X-Polarisation /die Energie py(m) von Koeffizienten zum Abbilden von H und V auf einer Y-Polarisation zur Gesamtenergie größer ist als ein voreingestellter erster Schwellwert thr1, ein Verhältnis der Energie von zwei hinteren Abgriffen, die zu entfernen sind, für die px(m) /die py(m) zur Gesamtenergie kleiner ist als ein voreingestellter zweiter Schwellwert thr2 und ein Verhältnis der Energie von neuen hinteren Abgriffen zur Gesamtenergie kleiner ist als ein voreingestellter dritter Schwellwert thr3, nachdem die zwei hinteren Abgriffe entfernt wurden, Bestimmen von Kosten für das grobe Anpassen eines Koeffizienten derart, dass sie niedriger sind als Kosten für kein grobes Anpassen des Koeffizienten, und Erzeugen einer Anpassungsanweisung zum groben Anpassen des Koeffizienten nach rechts; und
wenn ein Verhältnis der Energie von beliebigen mehreren hinteren Abgriffen für die Energie $px(m)$ von Koeffizienten zum Abbilden von H und V auf einer X-Polarisation /die Energie $py(m)$ von Koeffizienten zum Abbilden von H und V auf einer Y-Polarisation zur Gesamtenergie größer ist als der erste Schwellwert thr1, ein Verhältnis der Energie von zwei vorderen Abgriffen, die zu entfernen sind, für die $px(m)$ /die $py$(m) zur Gesamtenergie kleiner ist als der zweite Schwellwert thr2 und ein Verhältnis der Energie von neuen vorderen Abgriffen zur Gesamtenergie kleiner ist als der dritte Schwellwert thr3, nachdem die zwei vorderen Abgriffe entfernt wurden, Bestimmen der Kosten für das grobe Anpassen des Koeffizienten derart, dass sie niedriger sind als die Kosten für kein grobes Anpassen des Koeffizienten, und Erzeugen einer Anpassungsanweisung zum groben Anpassen des Koeffizienten nach links.

**Revendications**

1. Egaliseur adaptatif comprenant un module de génération de coefficients, un module de filtrage, un module de commande de coefficients et un module de sortie de données, dans lequel

   le module de génération de coefficients est configuré pour calculer une pluralité de coefficients nécessaires au filtrage, et pour délivrer les coefficients au module de filtrage et au module de commande de coefficients ;
   le module de filtrage est configuré pour filtrer des données d'entrée, composées d'une composante de polarisation horizontale H et d'une composante de polarisation verticale V envoyées par un module de synchronisation d'horloge par l'utilisation des coefficients, pour obtenir des données de polarisation X et des données de polarisation Y, et pour délivrer les données de polarisation X et les données de polarisation Y au module de sortie de données ;
   le module de sortie de données est configuré pour mettre en mémoire tampon et délivrer les données de polarisation X et les données de polarisation Y ; et **caractérisé en ce que**
   le module de commande de coefficients est configuré pour calculer, sur la base des coefficients provenant du module de génération de coefficients, une première distance entre un coefficient central de filtre et un barycentre de coefficients pour une mise en correspondance de la composante de polarisation horizontale, appelée H, et la composante de polarisation verticale, appelée V, sur une polarisation X, et une deuxième distance entre un coefficient central de de filtre et un barycentre de coefficients pour une mise en correspondance de H et V sur une polarisation Y ; pour obtenir un signal d'erreur de polarisation X sur la base de la première distance, et obtenir un signal d'erreur de polarisation Y sur la base de la deuxième distance ; et pour renvoyer le signal d'erreur de polarisation X et le signal d'erreur de polarisation Y au module de synchronisation d'horloge afin de traiter chacun des signaux d'erreur de polarisation en utilisant un signal d'erreur d'horloge extrait par le module de synchronisation d'horloge, de sorte que le module de synchronisation d'horloge effectue une interpolation pour les données de composante de polarisation horizontale H avec le signal d'erreur de polarisation X traité, et une interpolation pour les données de composante de polarisation verticale V avec le signal d'erreur de polarisation Y traité dans une synchronisation d'horloge, dans lequel les coefficients comprennent un coefficient $C_{xh}(m)$ pour une mise en correspondance de H sur une polarisation X, un coefficient $C_{xv}(m)$ pour une mise en correspondance de V sur une polarisation X, un coefficient $C_{yh}(m)$ pour une mise en correspondance de H sur une polarisation Y, et un coefficient $C_{yv}(m)$ pour une mise en correspondance de V sur une polarisation Y ;
   dans lequel l'utilisation du module de commande de coefficients pour calculer la première distance et la deuxième distance comprend de :

   calculer le barycentre *xc_mass* de coefficients pour une mise en correspondance de H et V sur une polarisation X selon une formule

$$xc\_mass = \sum_{m=1}^{M} \left( m \times |C_{xh}(m)|^n + m \times |C_{xv}(m)| \right) \Big/ \sum_{m=1}^{M} \left( |C_{xh}(m)|^n + |C_{xv}(m)| \right) ;$$

   calculer le barycentre *yc_mass* de coefficients pour une mise en correspondance de H et V sur une polarisation Y selon une formule

$$yc\_mass = \sum_{m=1}^{M} \left( m \times |C_{yh}(m)|^n + m \times |C_{yv}(m)| \right) \Big/ \sum_{m=1}^{M} \left( |C_{yh}(m)|^n + |C_{yv}(m)| \right) ;$$

   calculer la première distance *xc_dsc* entre le coefficient central de de filtre et le barycentre *xc_mass* de coefficients pour une mise en correspondance de H et V sur une polarisation X selon une formule *xc_dsc* = *xc_mass* - (*M* + 1)/2 ; et
   calculer la deuxième distance *yc_dsc* entre le coefficient central de filtre et le barycentre *yc_mass* de coefficients pour une mise en correspondance de H et V sur une polarisation Y selon une formule *yc_dsc* = *yc_mass* - (*M* + 1)/2 ; M représente un nombre de filtres pour le filtre RIF et n représente un nombre entier positif ;
   dans lequel l'utilisation du module de commande de coefficients pour obtenir le signal d'erreur de polarisation X et le signal d'erreur de polarisation Y comprend de :

   générer le signal d'erreur de polarisation X sur la base de la première distance par l'utilisation d'une boucle de filtrage de premier ordre, d'une boucle de filtrage de second ordre, ou d'une boucle de filtrage plus un circuit d'intégrateur au niveau d'une sortie de la boucle de filtrage, en fonction des exigences relatives aux performances du système ; et

générer le signal d'erreur de polarisation Y sur la base de la deuxième distance par l'utilisation d'une boucle de filtrage de premier ordre, d'une boucle de filtrage de second ordre, ou d'une boucle de filtrage plus un circuit d'intégrateur au niveau d'une sortie de la boucle de filtrage, en fonction des exigences relatives aux performances du système.

2. Egaliseur adaptatif selon la revendication 1, dans lequel le module de filtrage est un filtre (RIF) à réponse impulsionnelle finie.

3. Egaliseur adaptatif selon la revendication 2, dans lequel le module de génération de coefficients est mis en œuvre par un algorithme de détection aveugle.

4. Egaliseur adaptatif selon la revendication 1, dans lequel l'utilisation du module de commande de coefficients pour renvoyer le signal d'erreur de polarisation X et le signal d'erreur de polarisation Y à un module de synchronisation d'horloge pour traitement, de sorte que le module de synchronisation d'horloge effectue l'interpolation pour les données de polarisation X avec le signal d'erreur de polarisation X et l'interpolation pour les données de polarisation Y avec le signal d'erreur de polarisation Y dans la synchronisation d'horloge, comprend de :

renvoyer le signal d'erreur de polarisation X *cx_err* et le signal d'erreur de polarisation Y *cy_err* à un module de synchronisation d'horloge pour traitement, et le module de synchronisation d'horloge calcule une somme d'un signal d'erreur d'horloge *clk_err* extrait par le module de synchronisation d'horloge et du signal d'erreur de polarisation X *cx_err,* afin d'obtenir un signal d'erreur de polarisation total X *x_err* pour les données de polarisation X, et une somme du signal d'erreur d'horloge *clk_err* extrait par le module de synchronisation d'horloge et du signal d'erreur de polarisation Y *cy_err,* afin d'obtenir un signal d'erreur de polarisation total Y *y_err* pour les données de polarisation Y.

5. Egaliseur adaptatif selon la revendication 1, dans lequel
le module de commande de coefficients est en outre configuré pour détecter une énergie de coefficients pour une mise en correspondance de H et V sur une polarisation X, et une énergie de coefficients pour une mise en correspondance de H et V sur une polarisation Y, pour déterminer s'il faut régler des points d'échantillonnage de nombres entiers des coefficients lorsque l'énergie de coefficients est à un bord de filtre, et lorsque les points d'échantillonnage de nombres entiers doivent être réglés s'il faut délivrer une instruction de réglage au module de génération de coefficients et au module de sortie de données ;
le module de commande de coefficients est en outre configuré pour régler des coefficients générés par le module de commande de coefficients selon l'instruction de réglage provenant du module de commande de coefficients ; et
le module de sortie de données est en outre configuré pour régler des données devant être délivrées selon l'instruction de réglage provenant du module de commande de coefficients.

6. Egaliseur adaptatif selon la revendication 5, dans lequel
l'énergie *px(m)* de coefficients pour une mise en correspondance de H et V sur une polarisation X est calculée selon une formule $px(m) = |C_{xh}(m)|^n + |C_{xv}(m)|^n$ ;
l'énergie *py(m)* de coefficients pour une mise en correspondance de H et V sur une polarisation Y est calculée selon une formule $py(m) = |C_{yh}(m)|^n + |C_{yv}(m)|^n$,
dans lequel une plage de valeurs de m est [1, M] et n désigne un nombre entier positif ; et
le fait de déterminer s'il faut régler les points d'échantillonnage de nombres entiers des coefficients comprend de :

lorsqu'un rapport d'énergie de l'un quelconque parmi de multiples filtres avant, pour l'énergie *px(m)* de coefficients pour une mise en correspondance de H et V sur une polarisation X/l'énergie *py(m)* de coefficients pour une mise en correspondance de H et V sur une polarisation Y, sur une énergie totale est supérieur à un premier seuil thr1 prédéfini, qu'un rapport d'énergie de deux filtres arrière, qui doivent être supprimés, pour *px(m)/py(m)* sur l'énergie totale est inférieur à un deuxième seuil thr2 prédéfini, et qu'un rapport d'énergie de nouveaux filtres arrière sur l'énergie totale est inférieur à un troisième seuil thr3 prédéfini après que les deux filtres arrière ont été supprimés, déterminer un coût de réglage approximatif d'un coefficient comme étant inférieur à un coût de non réglage approximatif du coefficient, et générer une instruction de réglage pour régler approximativement le coefficient vers la droite ; et
lorsqu'un rapport d'énergie de l'un quelconque parmi plusieurs filtres arrière pour l'énergie *px(m)* de coefficients pour une mise en correspondance de H et V sur une polarisation X/l'énergie *py(m)* de coefficients pour une mise en correspondance de H et V sur une polarisation Y, sur l'énergie totale est supérieur au premier seuil thr1, qu'un rapport d'énergie de deux filtres avant, qui doivent être supprimés, pour *px(m)/py(m)* sur l'énergie totale est inférieur au deuxième seuil thr2, et qu'un rapport d'énergie de nouveaux filtres avant sur l'énergie totale est inférieur au troisième seuil thr3 après que les deux filtres avant ont été supprimés, déterminer le coût de réglage approximatif du coefficient comme étant inférieur au coût de non réglage approximatif du coefficient, et générer une instruction de réglage pour régler approximativement le coefficient vers la gauche.

**7.** Egaliseur adaptatif selon la revendication 1, dans lequel le module de commande de coefficients est en outre configuré pour :

calculer le barycentre *xc_mass* de coefficients pour une mise en correspondance de H et V sur une polarisation X, et le barycentre *yc_mass* de coefficients pour une mise en correspondance de H et V sur une polarisation Y, calculer une valeur maximale du barycentre *xc_mass* et une valeur maximale du barycentre *yc_mass* pendant une certaine période, calculer une valeur de différence entre les valeurs maximales du barycentre *xc_mass* et du barycentre *yc_mass,* déterminer s'il faut régler des points d'échantillonnage de nombres entiers des coefficients sur la base de la valeur de différence ; et

lorsque les points d'échantillonnage de nombres entiers des coefficients doivent être réglés, délivrer une instruction de réglage au module de génération de coefficients afin de régler les coefficients, et au module de sortie de données afin de régler les données devant être délivrées.

**8.** Egaliseur adaptatif selon la revendication 7, dans lequel le fait de déterminer s'il faut régler les points d'échantillonnage de nombres entiers des coefficients comprend de :

lorsque la valeur de différence entre la valeur maximale du barycentre *xc_mass* de coefficients pour une mise en correspondance de H et V sur une polarisation X et la valeur maximale du barycentre *yc_mass* de coefficients pour une mise en correspondance de H et V sur une polarisation Y est supérieure à un quatrième seuil prédéfini thr4, générer une instruction de réglage pour régler des coefficients de polarisation X vers la gauche et régler des coefficients de polarisation Y vers la droite ; et

lorsque la valeur de différence entre la valeur maximale du barycentre *xc_mass* de coefficients pour une mise en correspondance de H et V sur une polarisation X et la valeur maximale du barycentre *yc_mass* de coefficients pour une mise en correspondance de H et V sur une polarisation Y est inférieure à un cinquième seuil prédéfini thr4, générer une instruction de réglage pour régler les coefficients de polarisation X vers la droite et régler les coefficients de polarisation Y vers la gauche.

**9.** Egaliseur adaptatif selon la revendication 6 ou 8, dans lequel

lorsqu'un système fonctionne de manière stable à l'exception d'un changement soudain de canal, un premier seuil thr1, un deuxième seuil thr2, un troisième seuil thr3 et un quatrième seuil thr4 sont définis respectivement pour être supérieurs au premier seuil thr1, au deuxième seuil thr2, au troisième seuil thr3 et au quatrième seuil thr4 qui sont définis en réponse au système convergent initialement.

**10.** Egaliseur adaptatif selon la revendication 5 ou 7, dans lequel le module de génération de coefficients est en outre configuré, selon l'instruction de réglage, pour :

lorsque l'instruction de réglage est utilisée pour régler approximativement les coefficients vers la gauche, effectuer un processus de $C_{xh}{}'(m) = \begin{cases} C_{xh}(m+1) & m = 1,...,\ M-1 \\ 0 & m = M \end{cases}$ , et effectuer le même processus à $C_{xv}{}'(m)$; et lorsque l'instruction de réglage est utilisée pour régler approximativement les coefficients vers la droite, effectuer un processus de $C_{xh}{}'(m) = \begin{cases} C_{xh}(m+1) & m = 1,...,\ M-1 \\ 0 & m = M \end{cases}$ et effectuer le même processus à $C_{xv}{}'(m)$ ; ou

lorsque l'instruction de réglage est utilisée pour régler approximativement les coefficients vers la gauche, supprimer deux points d'échantillonnage avant pour les coefficients ; et lorsque l'instruction de réglage est utilisée pour régler approximativement les coefficients vers la droite, supprimer deux points d'échantillonnage arrière pour les coefficients.

**11.** Egaliseur adaptatif selon la revendication 5 ou 7, dans lequel le module de sortie de données est en outre configuré pour :

lorsque l'instruction de réglage n'est pas reçue, ce qui indique qu'il n'est pas nécessaire de régler les coefficients, permettre à l'égaliseur adaptatif de délivrer N points de données de (N + échant.) points de données arrière ; lorsque l'instruction de réglage est utilisée pour régler approximativement les coefficients vers la droite, permettre à l'égaliseur adaptatif de délivrer (N - échant.) points de données des (N + échant.) points de données arrière ; et lorsque l'instruction de réglage est utilisée pour régler approximativement les coefficients vers la gauche, permettre à l'égaliseur adaptatif de délivrer (N + échant.) points de données des (N + échant.) points de données arrière ; et

mettre en mémoire tampon les données devant être délivrées et délivrer les données avec une longueur fixe de N, dans lequel N désigne une longueur de données de sortie de RIF.

**12.** Procédé d'égalisation adaptative d'un égaliseur adaptatif comprenant de :

filtrer (600) des données d'entrée composées d'une composante de polarisation horizontale H et d'une composante de polarisation verticale V envoyées par un module de synchronisation d'horloge, par l'utilisation de coefficients acquis, afin d'obtenir des données de polarisation X et des données de polarisation Y, mettre en mémoire tampon et délivrer les données de polarisation X et les données de polarisation Y ; **caractérisé en ce qu'**il

calcule (601), sur la base des coefficients, une première distance entre un coefficient central de filtre et un barycentre de coefficients, pour mettre en correspondance la composante de polarisation horizontale, appelée H, et une composante de polarisation verticale, appelée V, sur une polarisation X, et une deuxième distance entre un coefficient central de filtre et un barycentre de coefficients pour une mise en correspondance de H et V sur une polarisation Y ; et

obtient (602) un signal d'erreur de polarisation X sur la base de la première distance, et un signal d'erreur de polarisation Y sur la base de la deuxième distance, selon les performances du système, et renvoie le signal d'erreur de polarisation X et le signal d'erreur de polarisation Y au module de synchronisation d'horloge afin de traiter chacun des signaux d'erreur de polarisation en utilisant un signal d'erreur d'horloge extrait par le module de synchronisation d'horloge,

de sorte que le module de synchronisation d'horloge effectue une interpolation pour les données de composante de polarisation horizontale H avec le signal d'erreur de polarisation X traité, et une interpolation pour les données de composante de polarisation verticale V avec le signal d'erreur de polarisation Y traité dans une synchronisation d'horloge ;

dans lequel le calcul de la première distance et de la deuxième distance comprend de :

calculer le barycentre *xc_mass* de coefficients pour une mise en correspondance de H et V sur une polarisation X selon une formule

$$xc\_mass = \sum_{m=1}^{M} \left( m \times |C_{xh}(m)|^n + m \times |C_{xv}(m)| \right) \Big/ \sum_{m=1}^{M} \left( |C_{xh}(m)|^n + |C_{xv}(m)| \right) ;$$

calculer le barycentre *yc_mass* de coefficients pour une mise en correspondance de H et V sur une polarisation Y selon une formule

$$yc\_mass = \sum_{m=1}^{M} \left( m \times |C_{yh}(m)|^n + m \times |C_{yv}(m)| \right) \Big/ \sum_{m=1}^{M} \left( |C_{yh}(m)|^n + |C_{yv}(m)| \right) ;$$

calculer la première distance *xc_dsc* entre le coefficient central de de filtre et le barycentre *xc_mass* de coefficients pour une mise en correspondance de H et V sur une polarisation X selon une formule *xc_dsc* = *xc_mass* - (*M* + 1)/2 ; et

calculer la deuxième distance *yc_dsc* entre le coefficient central de filtre et le barycentre *yc_mass* de coefficients pour une mise en correspondance de H et V sur une polarisation Y selon une formule *yc_dsc* = *yc_mass* - (*M* + 1)/2 ; M représente un nombre de filtres pour le filtre RIF et n représente un nombre entier positif ;

dans lequel l'obtention du signal d'erreur de polarisation X et du signal d'erreur de polarisation Y comprend de :

générer le signal d'erreur de polarisation X sur la base de la première distance par l'utilisation d'une boucle de filtrage de premier ordre, d'une boucle de filtrage de second ordre, ou d'une boucle de filtrage plus un circuit d'intégrateur au niveau d'une sortie de la boucle de filtrage, en fonction des exigences relatives aux performances du système ; et

générer le signal d'erreur de polarisation Y sur la base de la deuxième distance par l'utilisation d'une boucle de filtrage de premier ordre, d'une boucle de filtrage de second ordre, ou d'une boucle de filtrage plus un circuit d'intégrateur au niveau d'une sortie de la boucle de filtrage, en fonction des exigences relatives aux performances du système ;

dans lequel les coefficients comprennent un coefficient $C_{xh}(m)$ pour une mise en correspondance de H sur une polarisation X, un coefficient $C_{xv}(m)$ pour une mise en correspondance de V sur une polarisation X, un coefficient $C_{yh}(m)$ pour une mise en correspondance de H sur une polarisation Y, et un coefficient $c_{yv}(m)$ pour une mise en correspondance de V sur une polarisation Y.

13. Procédé selon la revendication 12, dans lequel l'étape de renvoi du signal d'erreur de polarisation X et du signal d'erreur de polarisation Y au module de synchronisation d'horloge pour traitement, de sorte que le module de synchronisation d'horloge effectue une interpolation pour les données de polarisation X avec le signal d'erreur de polarisation X et une interpolation pour les données de polarisation Y avec le signal d'erreur de polarisation Y dans une synchronisation d'horloge, comprend de :

renvoyer le signal d'erreur de polarisation X *cx_err* et le signal d'erreur de polarisation Y *cy_err* à un module de synchronisation d'horloge pour traitement, et le module de synchronisation d'horloge calcule une somme d'un signal d'erreur d'horloge *clk_err* extrait par le module de synchronisation d'horloge et du signal d'erreur de polarisation X *cx_err,* afin d'obtenir un signal d'erreur de polarisation total X *x_err* pour les données de polarisation X, et une somme du signal d'erreur d'horloge *clk_err* extrait par le module de synchronisation d'horloge et du signal d'erreur de polarisation Y *cy_err,* afin d'obtenir un signal d'erreur de polarisation total Y *y_err* pour les données de polarisation Y.

14. Procédé selon la revendication 12, comprenant en outre de :

détecter une énergie de coefficients pour une mise en correspondance de H et V sur une polarisation X et une énergie de coefficients pour une mise en correspondance de H et V sur une polarisation Y, et déterminer s'il faut régler des points d'échantillonnage de nombres entiers des coefficients lorsque l'énergie de coefficients est à un bord de filtre ; et lorsque les points d'échantillonnage de nombres entiers doivent être réglés, régler les coefficients et les données devant être délivrées selon une instruction de réglage.

15. Procédé selon la revendication 14, dans lequel

l'énergie $px(m)$ de coefficients pour une mise en correspondance de H et V sur une polarisation X est calculée selon une formule $px(m) = |C_{xh}(m)|^n + |C_{xv}(m)|^n$ ;

l'énergie $py(m)$ de coefficients pour une mise en correspondance de H et V sur une polarisation Y est calculée selon une formule $py(m) = |C_{yh}(m)|^n + |C_{yv}(m)|^n$,

dans lequel une plage de valeurs de m est [1, M] et n désigne un nombre entier positif ; et

le fait de déterminer s'il faut régler les points d'échantillonnage de nombres entiers des coefficients comprend de :

lorsqu'un rapport d'énergie de l'un quelconque parmi de multiples filtres avant, pour l'énergie $px(m)$ de coefficients pour une mise en correspondance de H et V sur une polarisation X/l'énergie $py(m)$ de coefficients pour une mise en correspondance de H et V sur une polarisation Y sur une énergie totale, est supérieur à un premier seuil thr1 prédéfini, qu'un rapport d'énergie de deux filtres arrière, qui doivent être supprimés, pour $px(m)/py(m)$ sur l'énergie totale est inférieur à un deuxième seuil thr2 prédéfini, et qu'un rapport d'énergie de nouveaux filtres arrière sur l'énergie totale est inférieur à un troisième seuil thr3 prédéfini après que les deux filtres arrière ont été supprimés, déterminer un coût de réglage approximatif d'un coefficient comme étant inférieur à un coût de non réglage approximatif du coefficient, et générer une instruction de réglage pour régler approximativement le coefficient vers la droite ; et

lorsqu'un rapport d'énergie de l'un quelconque parmi plusieurs filtres arrière, pour l'énergie $px(m)$ de coefficients pour une mise en correspondance de H et V sur une polarisation X/l'énergie $py(m)$ de coefficients pour une mise en correspondance de H et V sur une polarisation Y sur l'énergie totale, est supérieur au premier seuil thr1, qu'un rapport d'énergie de deux filtres avant, qui doivent être supprimés, pour $px(m)/py(m)$ sur l'énergie totale est inférieur au deuxième seuil thr2, et qu'un rapport d'énergie de nouveaux filtres avant sur l'énergie totale est inférieur au troisième seuil thr3 après que les deux filtres avant ont été supprimés, déterminer le coût de réglage approximatif du coefficient comme étant inférieur au coût de non réglage approximatif du coefficient, et générer une instruction de réglage pour régler approximativement le coefficient vers la gauche.

## FIG. 1

## FIG. 2

**FIG. 3**

**FIG. 4**

| SAMPLE (M-1) | N |
|---|---|

| SAMPLE (M-1) | N |
|---|---|

| SAMPLE (M-1) | N |
|---|---|

## FIG. 5

600

Filter input data by use of acquired coefficients to obtain X-polarization data and Y-polarization data, buffer and output the X-polarization data and the Y-polarization data

601

Calculate a first distance between a tap center and a barycenter of coefficients for mapping H and V onto X and a second distance between a tap center and a barycenter of coefficients for mapping H and V onto Y based on the acquired coefficients

602

Obtain an X-polarization error signal and a Y-polarization error signal according to system performance and based on the first distance and the second distance, and perform an interpolation for the X-polarization data with the X-polarization error signal and an interpolation for the Y-polarization data with the Y-polarization error signal in a clock synchronization

6031

Detect energy of coefficients for mapping H and V onto X and energy of coefficients for mapping H and V onto Y; when the energy of coefficients is at a tap edge, determine whether to adjust integer sampling points of the coefficients according to a cost for adjusting coefficients and a cost for not adjusting the coefficients; and if the integer sampling points of the coefficients need to be adjusted, adjust the coefficients and data to be outputted according to an adjustment instruction

6032

Calculate the barycenter of coefficients for mapping H and V onto X and the barycenter of coefficients for mapping H and V onto Y; calculate a maximum value of each barycenter in a certain period; calculate a difference value between the maximum values; and determine whether integer sampling points of the coefficients are adjusted based on the difference value; if the integer sampling points of the coefficients need to be adjusted, adjust the coefficients and data to be outputted according to an adjustment instruction

## FIG. 6

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2012134684 A1, KOIZUMI NOBUKAZU [JP]